(19) **Europäisches Patentamt European Patent Office Office européen des brevets**

(11) **EP 3 078 155 B1**

(12) **FASCICULE DE BREVET EUROPEEN**

(45) Date de publication et mention de la délivrance du brevet:
**03.01.2018 Bulletin 2018/01**

(21) Numéro de dépôt: **14814923.0**

(22) Date de dépôt: **12.11.2014**

(51) Int Cl.:
*H04L 9/08* (2006.01)        *H04L 9/30* (2006.01)
*H04L 9/06* (2006.01)

(86) Numéro de dépôt international:
**PCT/FR2014/052884**

(87) Numéro de publication internationale:
**WO 2015/082791 (11.06.2015 Gazette 2015/23)**

(54) **PROCÉDÉ DE MISE A JOUR D'UNE ARBORESCENCE DE FICHIERS MÉMORISÉE SUR UN SERVEUR DE STOCKAGE**

VERFAHREN ZUR AKTUALISIERUNG EINES AUF EINEM SPEICHERSERVER GESPEICHERTEN DATEIBAUMS

METHOD OF UPDATING A FILE TREE STORED ON A STORAGE SERVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.12.2013 FR 1361964**

(43) Date de publication de la demande:
**12.10.2016 Bulletin 2016/41**

(73) Titulaire: **Orange**
**75015 Paris (FR)**

(72) Inventeurs:
• **CANARD, Sébastien**
**F-14000 Caen (FR)**
• **DEVIGNE, Julien**
**35000 Rennes (FR)**

(74) Mandataire: **Fontenelle, Sandrine et al**
**Cabinet Beau de Loménie**
**158, rue de l'Université**
**75340 Paris Cedex 07 (FR)**

(56) Documents cités:
**US-A1- 2008 059 787**

• **HSIAO-YING LIN ET AL: "A Secure Fine-Grained Access Control Mechanism for Networked Storage Systems", SOFTWARE SECURITY AND RELIABILITY (SERE), 2012 IEEE SIXTH INTERNATIONAL CONFERENCE ON, IEEE, 20 juin 2012 (2012-06-20), pages 225-234, XP032218121, DOI: 10.1109/SERE.2012.35 ISBN: 978-1-4673-2067-2**
• **LIMING FANG ET AL: "Interactive conditional proxy re-encryption with fine grain policy", JOURNAL OF SYSTEMS & SOFTWARE, ELSEVIER NORTH HOLLAND, NEW YORK, NY, US, vol. 84, no. 12, 19 juin 2011 (2011-06-19), pages 2293-2302, XP028304398, ISSN: 0164-1212, DOI: 10.1016/J.JSS.2011.06.045 [extrait le 2011-06-30]**
• **Julien Devigne: "Protocoles de re-chiffrement pour le stockage de données", , 13 décembre 2013 (2013-12-13), XP055176979, Extrait de l'Internet: URL:https://tel.archives-ouvertes.fr/tel-0 1081377/document [extrait le 2015-03-16]**

**EP 3 078 155 B1**

**Description**

Arrière-plan de l'invention

L'invention se rapporte au domaine général des télécommunications.

Elle concerne plus particulièrement le domaine de la protection des données et notamment de la gestion des droits d'accès à des données personnelles et/ou confidentielles d'un utilisateur stockées sur un serveur de stockage mettant en oeuvre une primitive de chiffrement.

L'invention a ainsi une application privilégiée mais non limitative dans le contexte de l'informatique dématérialisée, aussi appelé informatique en nuage ou encore « cloud computing » en anglais, en vue de fournir un espace distant de stockage de données (ex. personnelles et/ou confidentielles) sécurisé, accessible par plusieurs utilisateurs et offrant une gestion dynamique des droits d'accès pouvant varier selon les données stockées.

Il existe aujourd'hui des solutions dites de rechiffrement (ou « proxy re-encryption » en anglais) permettant à un serveur de stockage de stocker à destination d'un unique utilisateur des données personnelles et/ou confidentielles de cet utilisateur sous forme chiffrée. Ces données sont par exemple chiffrées à l'aide d'un algorithme de chiffrement à clé publique utilisant la clé publique de l'utilisateur. Le serveur n'a aucune connaissance en clair des données ainsi stockées, préservant leur sécurité et leur confidentialité. Le serveur de stockage peut toutefois donner l'accès à ces données à des tiers autorisés par l'utilisateur sans que ce dernier n'ait à divulguer sa clé privée de chiffrement, et bien que ces données n'étaient pas initialement destinées à ces tiers.

Une telle solution est décrite par exemple dans le document de G. Ateniese et al. intitulé « Improved proxy re-encryption schemes with applications to secure distributed storage » ACM Transactions on Information and System Security, vol. 9, n°1, février 2006.

Selon cette solution, un utilisateur U1 souhaitant stocker des données sur le serveur de stockage, chiffre ces données en utilisant sa clé publique de chiffrement PK1, et fournit les données ainsi chiffrées au serveur de stockage. L'utilisateur U1 génère et transmet par ailleurs au serveur de stockage une clé dite de rechiffrement ou de transition à l'attention de l'utilisateur U2 donnant un droit d'accès à un utilisateur U2 à ces données. Le serveur de stockage utilise cette clé de rechiffrement pour rechiffrer les données chiffrées fournies par l'utilisateur U1 de sorte à les rendre accessibles à l'utilisateur U2 en utilisant sa clé privée SK2.

Ce faisant, le serveur de stockage n'a jamais accès aux données en clair de l'utilisateur U1 : le rechiffrement effectué par le serveur de stockage ne nécessite en effet aucun déchiffrement préalable des données chiffrées par l'utilisateur U1. Cette solution est donc sécurisée.

Toutefois, elle présente l'inconvénient que l'utilisateur U1 qui a confiance en l'utilisateur U2 peut effectivement lui donner des droits d'accès sur ses données stockées au niveau du serveur de stockage, mais ne peut pas limiter ces droits d'accès à une sélection seulement de ses données (par exemple un fichier de données spécifique dans un dossier ou un répertoire). Cette solution offre un partage en mode « tout ou rien » et ne permet donc pas une gestion fine des droits d'accès aux données de l'utilisateur U1 stockées sur le serveur de stockage.

Pour pallier cet inconvénient, Q. Tang décrit une solution de rechiffrement conditionnel (ou « conditional proxy re-encryption » en anglais) dans laquelle les données de l'utilisateur U1 ne sont plus seulement chiffrées pour l'utilisateur U1 mais également pour une condition d'accès C1. L'utilisateur U1 peut toujours accéder à ses données stockées sur le serveur de stockage à l'aide de sa clé privée SK1. En revanche, la condition d'accès C1 détermine, parmi les tiers en qui l'utilisateur U1 a confiance, ceux qui vont être capables d'accéder à ces données.

Ainsi si l'utilisateur U1 souhaite offrir des droits d'accès à des données portant sur la condition C1, il crée une clé de rechiffrement de lui-même vers l'utilisateur U2 pour la condition d'accès C1. Cette clé de rechiffrement permet au serveur de stockage de transformer les données chiffrées pour l'utilisateur U1 et la condition C1 en des données chiffrées pour l'utilisateur U2. L'utilisateur U2 peut ainsi accéder aux données associées à la condition d'accès C1 sur le serveur de stockage à l'aide de sa clé privée SK2.

Si des données portent sur une condition d'accès différente de C1 ou appartiennent à un utilisateur différent de U1, cette clé de rechiffrement portant sur l'utilisateur U1 et la condition d'accès C1 ne permettra pas au serveur de stockage de transformer les données en des données chiffrées pour l'utilisateur U2 et déchiffrables par celui-ci à l'aide de sa clé privée SK2.

Cette solution est toutefois assez peu flexible en pratique.

En effet, si l'on considère l'exemple d'un fichier de données, une fois que celui-ci est chiffré pour une condition d'accès C1, il n'est pas possible de modifier cette dernière, même à la demande de l'utilisateur U1. Il faut alors que l'utilisateur U1 intervienne, récupère le fichier de données en clair et recommence le processus de chiffrement et de stockage pour la condition d'accès modifiée.

Par ailleurs, un fichier de données est rarement isolé et est souvent inclus dans une arborescence de fichiers et/ou de répertoires. Cette arborescence peut être plus ou moins importante (i.e. comprendre plus ou moins de niveaux) et réunir plusieurs ensembles de fichiers dans différents répertoires, sous-répertoires, etc.

Il peut être souhaitable pour l'utilisateur U1 de pouvoir appliquer différentes conditions d'accès à différentes parties de cette arborescence. Or, si un répertoire d'une telle arborescence porte sur une condition d'accès C1 (et donc tous les fichiers qu'il contient), il n'est pas possible, avec la solution proposée par Tang, de faire qu'un fichier contenu dans ce répertoire porte également sur une condition d'accès C2.

En outre, cette solution ne permet pas de gérer facilement une mise à jour de l'arborescence de fichiers, par exemple en insérant de nouveaux fichiers et/ou répertoires dans l'arborescence, ou en effectuant des déplacements et/ou des copies d'un fichier et/ou répertoire vers un autre répertoire.

Le document XP32218121, Hsiao-Ying Lin et al. : "A Secure Fine-Grained Access Control Mechanism for Networked Storage Systems" décrit un rechiffrement pour un serveur de stockage avec une arborescence de fichiers et dossiers.

Objet et résumé de l'invention

L'invention permet de pallier notamment ces inconvénients en proposant un procédé de mise à jour, par un dispositif électronique d'un premier utilisateur, d'une arborescence de fichiers de données et/ou de dossiers du premier utilisateur mémorisée dans un serveur de stockage apte à mettre en oeuvre un mécanisme de rechiffrement, cette arborescence comprenant au moins un dossier cible auquel le premier utilisateur a autorisé un second utilisateur à accéder en fournissant au serveur de stockage une clé de rechiffrement pour ce dossier cible du premier utilisateur vers le second utilisateur. Le procédé selon l'invention comprend, pour chaque inclusion ou déplacement d'un élément dans ce dossier cible, cet élément pouvant être un fichier de données ou un dossier :

- une étape de génération d'une clé de rechiffrement pour le premier utilisateur de l'élément vers un dossier appartenant à un niveau hiérarchique directement supérieur dans l'arborescence dans lequel est inclus l'élément, cette clé de rechiffrement étant générée à partir d'un identifiant secret de l'élément, d'un identifiant secret attribué au dossier du niveau hiérarchique directement supérieur, et des clés privée et publique du premier utilisateur ;
- si l'élément est un fichier de données, une étape de chiffrement de l'élément en utilisant une clé publique du premier utilisateur et l'identifiant secret attribué à l'élément ; et
- une étape de mise à jour de l'arborescence comprenant la fourniture au serveur de stockage de la clé de rechiffrement générée pour le premier utilisateur et, si l'élément est un fichier de données, du chiffré de cet élément.

Corrélativement, l'invention vise aussi un dispositif électronique d'un premier utilisateur apte à mettre à jour une arborescence de fichiers de données et/ou de dossiers du premier utilisateur mémorisée dans un serveur de stockage apte à mettre en oeuvre un mécanisme de rechiffrement, cette arborescence comprenant au moins un dossier cible auquel le premier utilisateur a autorisé un second utilisateur à accéder en fournissant au serveur de stockage une clé de rechiffrement pour ce dossier cible du premier utilisateur vers le second utilisateur. Ce dispositif électronique du premier utilisateur comporte des modules activés pour chaque inclusion ou déplacement d'un élément dans ce dossier cible, cet élément pouvant être un fichier de données ou un dossier, ces modules comprenant :

- un module de génération d'une clé de rechiffrement pour le premier utilisateur de l'élément vers un dossier appartenant à un niveau hiérarchique directement supérieur dans l'arborescence dans lequel est inclus l'élément, cette clé de rechiffrement étant générée à partir d'un identifiant secret de l'élément, d'un identifiant secret attribué au dossier du niveau hiérarchique directement supérieur, et des clés privée et publique du premier utilisateur ;
- un module de chiffrement de l'élément, activé si l'élément est un fichier de données, apte à utiliser une clé publique du premier utilisateur et l'identifiant secret attribué à l'élément ; et
- un module de mise à jour de l'arborescence apte à fournir au serveur de stockage la clé de rechiffrement générée pour le premier utilisateur et, si l'élément est un fichier de données, le chiffré de cet élément.

Par « dossier cible », on entend ici un dossier d'un premier utilisateur auquel celui-ci a autorisé un second utilisateur à accéder. Aucune limitation n'est attachée à la position du dossier cible dans l'arborescence de fichiers et de dossiers du premier utilisateur. En particulier, le dossier cible n'est pas nécessairement localisé à la racine de l'arborescence, mais peut lui-même être inclus dans un autre dossier de cette arborescence.

De même, le fichier et/ou dossier inclus ou déplacé dans le dossier cible considéré dans l'invention n'est pas nécessairement inclus directement dans le dossier cible, mais il peut être inclus ou déplacé dans un dossier se trouvant « sous » le dossier cible. Plusieurs dossiers parents peuvent séparer le fichier et/ou dossier inclus ou déplacé du dossier cible à proprement parler.

Par ailleurs, il convient de noter que le serveur de stockage désigne ici au sens large une ou plusieurs entités distinctes participant à l'opération de stockage sécurisé des données du premier utilisateur. Les fonctions de stockage à proprement parler et de rechiffrement mises en oeuvre par le serveur de stockage ne sont pas nécessairement mises en oeuvre par un unique dispositif matériel mais peuvent être réalisées par plusieurs entités logicielles ou matérielles distinctes (ex. par plusieurs serveurs) regroupées dans la description sous l'appellation générale de serveur de stockage par souci de simplification.

L'invention repose ainsi sur l'implémentation au niveau du serveur de stockage d'une primitive de serveur de rechiffrement conditionnel. Toutefois, conformément à l'invention, pour permettre une gestion fine des droits d'accès donnés par le premier utilisateur à un second utilisateur sur des fichiers et/ou dossiers d'une arborescence de fichiers et dossiers, une condition d'accès unique est attribuée par le premier utilisateur à chaque fichier et/ou dossier de l'arborescence. Chaque condition d'accès identifie donc de manière unique l'élément (fichier ou dossier) auquel elle se rapporte.

Conformément à l'invention, cette condition d'accès est un identifiant secret de l'élément. Cet identifiant secret peut être déterminé par exemple à partir d'un identifiant public de cet élément et d'une clé privée du premier utilisateur. Plus spécifiquement, l'identifiant secret de l'élément peut être déterminé par application d'une fonction de hachage paramétrée par la clé privée du premier utilisateur à l'identifiant public de l'élément. Il en est de même de l'identifiant secret de chaque dossier de l'arborescence contenant l'élément.

Etant donné que chaque fichier et chaque dossier de l'arborescence possèdent une condition d'accès différente de celle du dossier dans lequel ils sont inclus, l'invention propose un mécanisme de rechiffrement (ou reconditionnement) de chaque fichier et dossier au fur et à mesure de leur insertion dans l'arborescence permettant de garantir que le second utilisateur puisse bien accéder à toutes les données de l'arborescence auxquelles il est autorisé à accéder par le premier utilisateur. Ce mécanisme de rechiffrement se décompose en deux phases :

- une première phase de reconditionnement ou rechiffrement dit « vertical » au cours de laquelle des clés de rechiffrement sont créées par le dispositif électronique du premier utilisateur afin de changer la condition d'accès portant sur un élément d'un niveau hiérarchique de l'arborescence en une condition d'accès portant sur un dossier du niveau hiérarchique directement supérieur contenant cet élément. Ces clés de rechiffrement sont créées pour tous les niveaux de l'arborescence séparant l'élément considéré du dossier cible ; et
- une seconde phase de rechiffrement dit « horizontal » aussi communément appelée phase de rechiffrement, au cours de laquelle le dispositif électronique du premier utilisateur crée une clé de rechiffrement portant sur le dossier cible du premier utilisateur vers le second utilisateur. Cette clé de rechiffrement est destinée à permettre au second utilisateur d'accéder à l'ensemble du contenu du dossier cible.

Ce mécanisme de reconditionnement en deux phases permet de construire une arborescence de clés de rechiffrement qui est à l'image de l'arborescence de fichiers et/ou de dossiers stockée au niveau du serveur de stockage. Autrement dit, à chaque inclusion d'un fichier et/ou d'un nouveau dossier dans l'arborescence ou à chaque déplacement d'un fichier et/ou d'un dossier d'un dossier à un autre de l'arborescence, une clé de rechiffrement portant sur ce fichier ou ce dossier est créée de sorte à ramener la condition portant sur ce fichier ou ce dossier vers une condition portant sur un dossier d'un niveau hiérarchique directement supérieur, et ce jusqu'à arriver de proche en proche à une condition sur le dossier cible auquel le premier utilisateur a autorisé le second utilisateur à accéder.

En outre, un chiffré est généré pour chaque nouveau fichier inséré dans le dossier cible. On note que lorsque le premier utilisateur insère un dossier comprenant plusieurs fichiers dans le dossier cible, l'invention est appliquée dans un premier temps au dossier (avec la génération d'une clé de rechiffrement de ce dossier vers le dossier appartenant au niveau hiérarchique directement supérieur), puis à chacun des fichiers contenus dans ce dossier (avec la génération d'un chiffré de chaque fichier et d'une clé de rechiffrement de chaque fichier vers le dossier dans lequel ce fichier est directement inclus).

L'invention garantit ainsi une solution de stockage sécurisée de l'arborescence des fichiers de données du premier utilisateur (le chiffré de chaque fichier fourni au serveur de stockage est en effet destiné au premier utilisateur uniquement et requiert, pour être décodé, la connaissance de sa clé secrète), tout en offrant la possibilité d'avoir une gestion fine des droits d'accès à cette arborescence.

Dans un mode particulier de réalisation, l'étape de chiffrement de l'élément comprend l'application d'un algorithme de chiffrement à clé publique ou d'un algorithme de chiffrement hybride s'appuyant sur un algorithme de chiffrement à clé publique et un algorithme de chiffrement à clé secrète. Notamment, lorsque l'étape de chiffrement comprend l'application d'un algorithme de chiffrement hybride :

- l'algorithme de chiffrement à clé secrète peut être appliqué à l'élément en utilisant une clé secrète générée pour cet élément ; et
- l'algorithme de chiffrement à clé publique peut être appliqué à la clé secrète générée pour l'élément en utilisant une clé dérivée de la clé publique du premier utilisateur et de l'identifiant secret de l'élément.

L'utilisation d'un algorithme de chiffrement hybride permet avantageusement de gérer plus facilement les fichiers et/ou dossiers de dimensions importantes, en tirant profit d'une part des fonctionnalités du chiffrement à clé publique (ou asymétrique) et d'autre part de l'efficacité du chiffrement à clé secrète (ou symétrique).

Dans un mode particulier de réalisation, la clé de rechiffrement pour le premier utilisateur de l'élément vers le dossier du niveau hiérarchique directement supérieur est générée en appliquant un algorithme de chiffrement à clé publique à un message obtenu à partir de l'identifiant privé de l'élément et d'une clé temporaire dérivée de la clé privée du premier utilisateur, en utilisant la clé publique du premier utilisateur et l'identifiant secret du dossier du niveau hiérarchique directement supérieur.

Ce mode de réalisation permet de simplifier le rechiffrement réalisé au niveau du serveur de stockage. Comme décrit plus en détail ultérieurement, ce rechiffrement s'appuie sur les multiples clés de rechiffrement générées lors de la phase de reconditionnement vertical et transmises au serveur de stockage. Il est ainsi composé d'une pluralité de rechiffrements mis en oeuvre de manière itérative, chaque rechiffrement utilisant une clé de rechiffrement distincte. Dans ce mode de réalisation, un rechiffrement mené à une itération donnée utilise le chiffré généré à l'itération précédente uniquement. Il n'est pas nécessaire de prendre en compte l'ensemble des chiffrés précédemment générés.

Dans un autre mode particulier de réalisation, la clé de rechiffrement du premier utilisateur vers le deuxième utilisateur est généré en appliquant un algorithme de chiffrement à clé publique sur un message obtenu à partir d'un identifiant secret attribué au dossier cible et de la clé privée du premier utilisateur, en utilisant la clé publique du second utilisateur.

De cette sorte on s'assure que seul le second utilisateur peut accéder au dossier cible du premier utilisateur en utilisant sa clé privée.

Le mécanisme de reconditionnement proposé par l'invention s'appuie non seulement sur la construction (ou mise à jour) d'une arborescence de clés de rechiffrement à l'image de l'arborescence de fichiers (et/ou dossiers) du premier utilisateur stockée au niveau du serveur de stockage, mais également sur le rechiffrement par le serveur de stockage des chiffrés transmis par le dispositif du premier utilisateur et sur le déchiffrement par le dispositif électronique du second utilisateur des éléments rechiffrés par le serveur de stockage.

Ainsi, selon un autre aspect, l'invention vise également un procédé de rechiffrement, par un serveur de stockage d'une arborescence de fichiers de données et/ou de dossiers d'un premier utilisateur, cette arborescence comprenant au moins un dossier cible auquel le premier utilisateur a autorisé un second utilisateur à accéder, le procédé de rechiffrement comprenant, pour chaque fichier de données inclus ou déplacé dans le dossier cible pour lequel un chiffré a été fourni audit serveur de stockage :

- une première étape de rechiffrement résultant en un premier chiffré du fichier et comprenant :

  ◦ un rechiffrement du chiffré du fichier fourni au serveur de stockage en utilisant une clé de rechiffrement pour le premier utilisateur de ce fichier vers un dossier d'un niveau hiérarchique directement supérieur de l'arborescence dans lequel est inclus le fichier ; et
  ◦ pour chaque niveau hiérarchique k de l'arborescence depuis ce niveau hiérarchique directement supérieur jusqu'à un niveau hiérarchique directement inférieur au niveau hiérarchique du dossier cible, un rechiffrement résultant en un chiffré pour le niveau hiérarchique k, d'un chiffré obtenu pour le niveau hiérarchique k-1, ce rechiffrement étant mis en oeuvre en utilisant une clé de rechiffrement pour le premier utilisateur d'un dossier du niveau hiérarchique k vers un dossier du niveau hiérarchique k+1 dans lesquels est inclus le fichier ;

  le premier chiffré du fichier correspondant au chiffré obtenu pour le niveau hiérarchique directement inférieur au niveau hiérarchique du dossier cible ; et
- une seconde étape de rechiffrement résultant en un second chiffré du fichier comprenant un rechiffrement du premier chiffré avec une clé de rechiffrement pour le dossier cible du premier utilisateur vers le second utilisateur.

Corrélativement l'invention concerne également un serveur de stockage d'une arborescence de fichiers de données et/ou de dossiers d'un premier utilisateur, comprenant au moins un dossier cible auquel le premier utilisateur a autorisé un second utilisateur à accéder, le serveur de stockage comprenant un premier et un second modules de rechiffrement activés pour chaque fichier de données inclus ou déplacé dans le dossier cible pour lequel un chiffré a été fourni audit serveur de stockage, et dans lequel :

- le premier module de rechiffrement est apte à générer un premier chiffré du fichier en mettant en oeuvre :

  ◦ un rechiffrement du chiffré du fichier fourni au serveur de stockage en utilisant une clé de rechiffrement pour le premier utilisateur de ce fichier vers un dossier d'un niveau hiérarchique directement supérieur de l'arborescence dans lequel est inclus le fichier ; et
  ◦ pour chaque niveau hiérarchique k de l'arborescence depuis ce niveau hiérarchique directement supérieur jusqu'à un niveau hiérarchique directement inférieur au niveau hiérarchique du dossier cible, un rechiffrement résultant en un chiffré pour le niveau hiérarchique k, d'un chiffré obtenu pour le niveau hiérarchique k-1, ce rechiffrement étant mis en oeuvre en utilisant une clé de rechiffrement pour le premier utilisateur d'un dossier du niveau hiérarchique k vers un dossier du niveau hiérarchique k+1 dans lesquels est inclus le fichier ;

le premier chiffré du fichier correspondant au chiffré obtenu pour le niveau hiérarchique directement inférieur au niveau hiérarchique du dossier cible ;
- le second module de rechiffrement est apte à générer un second chiffré du fichieren mettant en oeuvre un rechiffrement du premier chiffré avec une clé de rechiffrement pour le dossier cible du premier utilisateur vers le second utilisateur.

En d'autres mots, le serveur de stockage rechiffre chaque fichier de l'arborescence de fichiers du premier utilisateur en remontant l'arborescence à l'aide des clés de rechiffrement transmises par le dispositif du premier utilisateur, puis réalise un dernier rechiffrement pour permettre au second utilisateur d'accès au fichier ainsi rechiffré.

Selon un autre aspect encore, l'invention vise un procédé de déchiffrement d'un chiffré d'un fichier de données d'une arborescence de fichiers de données et/ou de dossiers d'un premier utilisateur, cette arborescence comprenant au moins un dossier cible contenant le fichier et auquel le premier utilisateur a autorisé un second utilisateur à accéder, ce procédé de déchiffrement étant destiné à être mis en oeuvre par un dispositif électronique du second utilisateur, ledit chiffré du fichier ayant été fourni audit dispositif électronique suite à l'exécution par un serveur de stockage d'un procédé de rechiffrement l'invention, ce procédé de déchiffrement comprenant une étape de déchiffrement de ce chiffré en utilisant une clé privée du second utilisateur.

Corrélativement, l'invention concerne aussi un dispositif électronique comprenant un module de déchiffrement d'un chiffré d'un fichier de données d'une arborescence de fichiers de données et/ou de dossiers d'un premier utilisateur, cette arborescence comprenant au moins un dossier cible contenant le fichier et auquel le premier utilisateur a autorisé le second utilisateur à accéder, ce chiffré ayant été fourni au dispositif électronique par un serveur de stockage selon l'invention, le module de déchiffrement étant apte à déchiffrer ce chiffré en utilisant une clé privée du second utilisateur.

Selon un autre aspect encore, l'invention vise un système comprenant :

- un dispositif électronique d'un premier utilisateur selon l'invention ;
- un serveur de stockage selon l'invention d'une arborescence de fichiers de données et/ou de dossiers du premier utilisateur comprenant au moins un dossier cible auquel le premier utilisateur a autorisé un second utilisateur à accéder ; et
- un dispositif électronique du second utilisateur selon l'invention.

Le procédé de rechiffrement, le serveur de stockage, le procédé de déchiffrement, le dispositif électronique du second utilisateur et le système selon l'invention bénéficient des mêmes avantages cités précédemment que le procédé de mise à jour et le dispositif électronique du premier utilisateur.

Dans un mode particulier de réalisation, les différentes étapes du procédé de mise à jour, et/ou du procédé de rechiffrement et/ou du procédé de déchiffrement sont déterminées par des instructions de programmes d'ordinateurs.

En conséquence, l'invention vise aussi un programme d'ordinateur sur un support d'informations, ce programme étant susceptible d'être mis en oeuvre dans un dispositif électronique ou plus généralement dans un ordinateur, ce programme comportant des instructions adaptées à la mise en oeuvre des étapes d'un procédé de mise à jour tel que décrit ci-dessus.

L'invention vise également un programme d'ordinateur sur un support d'informations, ce programme étant susceptible d'être mis en oeuvre dans un serveur de stockage ou plus généralement dans un ordinateur, ce programme comportant des instructions adaptées à la mise en oeuvre des étapes d'un procédé de rechiffrement tel que décrit ci-dessus.

L'invention concerne aussi un programme d'ordinateur sur un support d'informations, ce programme étant susceptible d'être mis en oeuvre dans un dispositif électronique ou plus généralement dans un ordinateur, ce programme comportant des instructions adaptées à la mise en oeuvre des étapes d'un procédé de déchiffrement tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

On peut également envisager, dans d'autres modes de réalisation, que le procédé de mise à jour, le procédé de rechiffrement, le procédé de déchiffrement, les dispositifs électroniques et le serveur de stockage selon l'invention présentent en combinaison tout ou partie des caractéristiques précitées.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, de façon schématique, un système conforme à l'invention dans un mode particulier de réalisation ;
- la figure 2 illustre l'architecture matérielle de dispositifs électroniques et d'un serveur de stockage conformes à l'invention dans un mode particulier de réalisation ;
- la figure 3 représente schématiquement le principe de reconditionnement mis en oeuvre par l'invention au travers des procédés de mise à jour, de rechiffrement et de déchiffrement selon l'invention ;
- la figure 4 illustre sous forme d'ordinogramme, les principales étapes d'un procédé de mise à jour d'une arborescence de fichiers et/ou dossiers selon l'invention, dans un mode particulier de réalisation ;
- la figure 5 représente un exemple d'arborescence de fichiers et/ou dossiers ;
- la figure 6 illustre, sous forme d'ordinogramme, les principales étapes d'un procédé de rechiffrement selon l'invention, dans un mode particulier de réalisation ; et
- la figure 7 illustre sous forme d'ordinogramme, les principales étapes d'un procédé de déchiffrement selon l'invention, dans un mode particulier de réalisation.

Description détaillée de l'invention

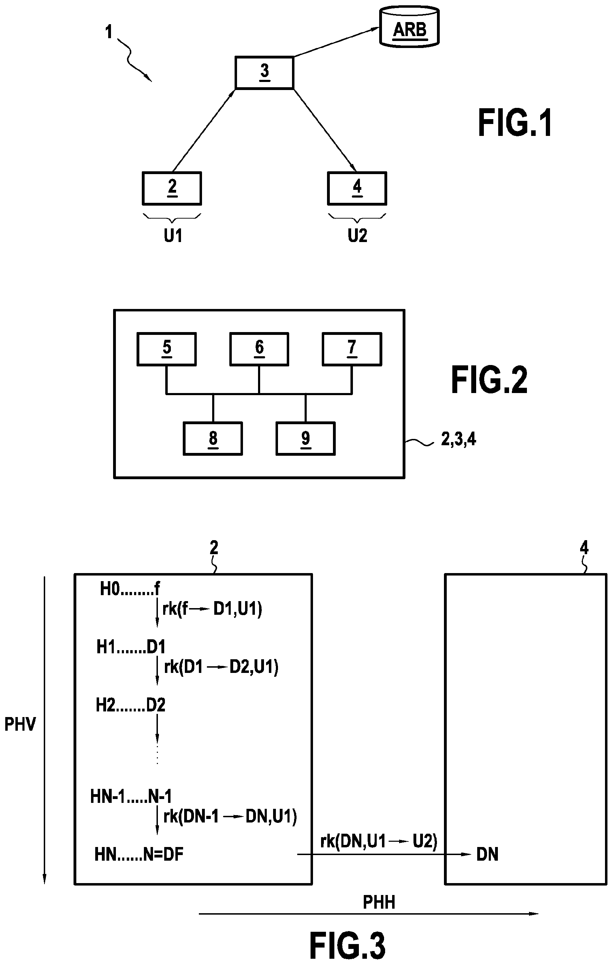

La **figure 1** représente, dans son environnement, un système 1 conforme à l'invention, dans un mode particulier de réalisation. Ce système 1 comprend :

- un dispositif électronique 2 appartenant à un premier utilisateur U1 et conforme à l'invention ;
- un serveur de stockage 3 conforme à l'invention, auprès duquel l'utilisateur U1 a stocké, via par exemple son dispositif électronique 2, des données confidentielles et/ou personnelles sous la forme d'une arborescence ARB de fichiers de données et/ou de dossiers (aussi appelés répertoires). Pour assurer la confidentialité des données de l'utilisateur U1, ces dernières sont stockées sur le serveur de stockage 3 sous une forme chiffrée ; et
- un dispositif électronique 4 appartenant à un second utilisateur U2 et conforme à l'invention.

Aucune limitation n'est attachée à la nature à proprement parler des dispositifs électroniques 2 et 4 des utilisateurs U1 et U2. Il peut ainsi s'agir par exemple d'ordinateurs, de terminaux mobiles, de tablettes électroniques, etc.

On suppose ici que l'utilisateur U1 a autorisé l'utilisateur U2 à accéder auprès du serveur de stockage 3 à au moins un dossier DF de l'arborescence ARB (dossier cible au sens de l'invention) contenant des données confidentielles de l'utilisateur U1. Comme mentionné précédemment, aucune limitation n'est attachée à la position du dossier cible DF dans l'arborescence ARB de fichiers et de dossiers du premier utilisateur stockée par le serveur de stockage 3. En particulier, le dossier cible n'est pas nécessairement localisé à la racine de cette arborescence, mais peut lui-même être inclus dans un autre dossier de cette dernière.

Le droit d'accès accordé par l'utilisateur U1 permet à l'utilisateur U2 d'accéder à tous les fichiers et les dossiers (i.e. sous-dossiers) inclus dans le dossier DF, autrement dit, appartenant dans l'arborescence ARB à des niveaux hiérarchiques inférieurs au niveau hiérarchique du dossier DF.

Pour permettre cet accès tout en préservant la sécurité des données de l'utilisateur U1, le serveur de stockage 3 est doté, conformément à l'invention, d'une primitive (i.e. d'un module) de serveur de rechiffrement conditionnel (ou « conditional proxy re-registration » en anglais).

Dans le mode de réalisation décrit ici, les dispositifs électroniques 2 et 4 et le serveur de stockage 3 disposent de l'architecture matérielle d'un ordinateur, telle qu'illustrée schématiquement à la **figure 2**.

Ils comprennent notamment chacun un processeur 5, une mémoire morte 6, une mémoire vive 7, une mémoire non volatile 8 et des moyens de communication 9 leur permettant de communiquer entre eux. Ces moyens de communication 9 comprennent par exemple des moyens de communication sur un réseau de télécommunications. Aucune limitation n'est attachée à la nature de ce réseau ; il peut s'agir indifféremment d'un réseau filaire ou sans fil, fixe ou mobile, etc.

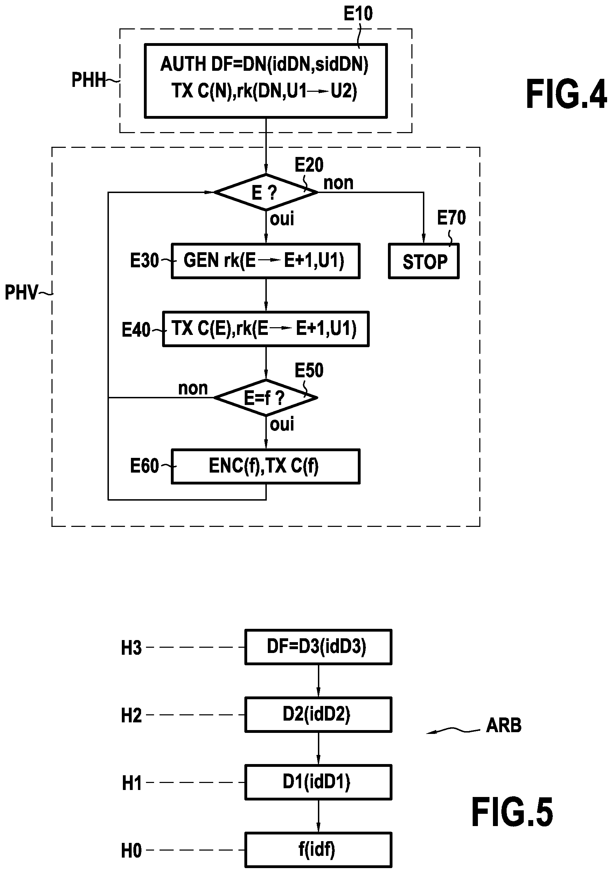

La mémoire morte 6 du dispositif électronique 2 constitue un support d'enregistrement conforme à l'invention, lisible par le processeur et sur lequel est enregistré un programme d'ordinateur conforme à l'invention, comportant des instructions pour l'exécution des étapes du procédé de mise à jour conforme à l'invention, détaillées ultérieurement en référence à la figure 4.

Ce programme d'ordinateur définit, de façon correspondante, des modules logiciels et fonctionnels du dispositif électronique 2 qui sont aptes à mettre en oeuvre les étapes du procédé de mise à jour, tels que notamment un module de chiffrement de données, un module de génération de clés de rechiffrement et un module de mise à jour de l'arborescence ARB s'appuyant sur les moyens de communication 9 du dispositif électronique 2.

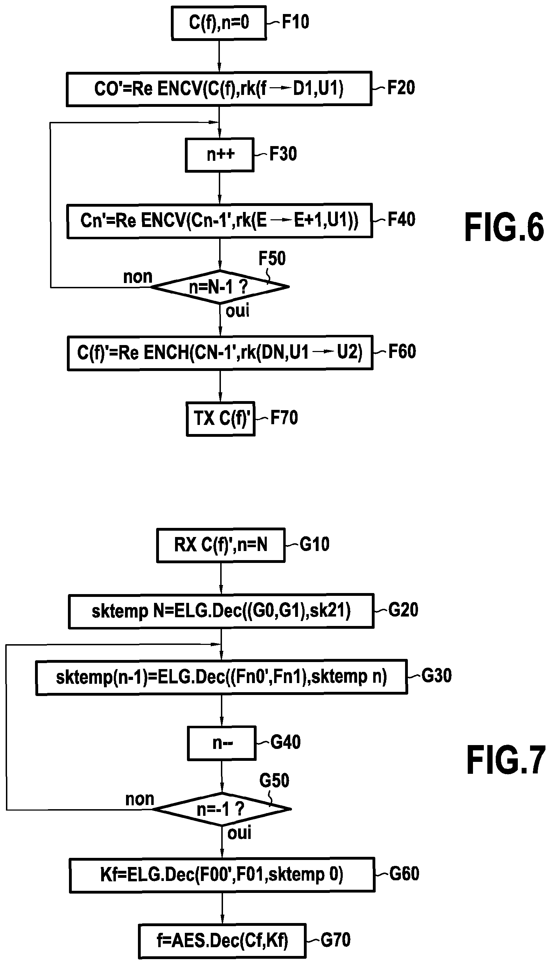

De même, la mémoire morte 6 du serveur de stockage 3 constitue un support d'enregistrement conforme à l'invention, lisible par le processeur et sur lequel est enregistré un programme d'ordinateur conforme à l'invention, comportant des instructions pour l'exécution des étapes du procédé de rechiffrement conforme à l'invention, détaillées ultérieurement en référence à la figure 6.

Ce programme d'ordinateur définit, de façon correspondante, des modules logiciels et fonctionnels du serveur de stockage 3 qui sont aptes à mettre en oeuvre les étapes du procédé de rechiffrement, tels que notamment un module de rechiffrement de données chiffrées et un module de réception s'appuyant sur les moyens de communication 9 du serveur de stockage 3.

De façon similaire, la mémoire morte 6 du dispositif électronique 4 constitue un support d'enregistrement conforme à l'invention, lisible par le processeur et sur lequel est enregistré un programme d'ordinateur conforme à l'invention, comportant des instructions pour l'exécution des étapes du procédé de déchiffrement conforme à l'invention, détaillées ultérieurement en référence à la figure 7.

Ce programme d'ordinateur définit, de façon correspondante, des modules logiciels et fonctionnels du dispositif électronique 4 qui sont aptes à mettre en oeuvre les étapes du procédé de déchiffrement, tels que notamment un module de déchiffrement de données, et un module de réception s'appuyant sur les moyens de communication 9 du dispositif électronique 4.

Dans le mode de réalisation décrit ici, on suppose que chacun des dispositifs électroniques 2 et 4 (et donc corrélativement des utilisateurs U1 et U2) disposent d'une paire de clés publique et privée notée (PKi,SKi) avec i=1, 2. Ces clés ont été générées ici par chacun des dispositifs 2 et 4 respectivement, en appliquant la procédure suivante, pour i=1, 2 :

(1) Deux entiers ski1, ski2 sont choisis aléatoirement par le dispositif dans l'ensemble multiplicatif $\mathbb{Z}_p^* = (\mathbb{Z}/p\mathbb{Z})\setminus\{0\}$, $\mathbb{Z}$ désignant l'ensemble des entiers relatifs et p un nombre premier.

(2) Les éléments suivants sont ensuite calculés par le dispositif :

$$\mathrm{pki}1 = g^{ski1} \text{ et } \mathrm{pki}2 = g^{ski2}$$

où g désigne un élément générateur d'un groupe G d'ordre p.

(3) Le dispositif obtient alors :

$$\mathrm{SKi} = (\mathrm{ki}, ski1, ski2) \text{ où } \mathrm{ki}=\mathrm{HMAC.KG}(\mathrm{pp}_{hmac})$$

et

$$\mathrm{PKi} = (\mathrm{pki}1, \mathrm{pki}2)$$

où HMAC.KG est une fonction de HMAC (pour « keyed-Hashing for Message Authentication » en anglais) détaillée davantage ultérieurement, prenant en entrée des paramètres publics $\mathrm{pp}_{hmac}$ et retournant une clé secrète ki. Une telle fonction est décrite par exemple dans le document édité par l'IETF (Internet Engineering Task Force) RFC 2014 intitulé « HMAC : Keyed-Hashing for Message Authentication ».

Les dimensions des clés SKi et PKi, i=1,2, sont fixées en fonction du niveau de sécurité que l'on souhaite atteindre, de façon connue en soi.

Comme mentionné précédemment, l'invention repose notamment sur l'implémentation au niveau du serveur de stockage 3 d'une primitive de serveur de rechiffrement conditionnel. Par ailleurs, pour permettre une gestion fine des droits d'accès donnés par l'utilisateur U1, une condition d'accès unique est attribuée avantageusement à chaque fichier et/ou dossier de l'arborescence ARB par l'utilisateur U1. Dans l'exemple illustré ici, cette condition d'accès est un identifiant du fichier et/ou du dossier auquel elle se rapporte de façon unique.

Un droit d'accès à un fichier et/ou à un dossier de l'arborescence ARB est alors donné par l'utilisateur U1 à un utilisateur U2 en générant une clé de rechiffrement ou de transition notée rk portant sur ce fichier et/ou dossier, de l'utilisateur U1 vers l'utilisateur U2. Cette clé de rechiffrement permet de transformer les données chiffrées (appelées également « chiffré ») auxquelles elle se rapporte pour l'utilisateur U1 en données chiffrées pour l'utilisateur U2 que celui-ci peut déchiffrer à l'aide de sa clé privée. Autrement dit, chaque clé de rechiffrement générée pour l'utilisateur U2 inclut une condition qui permet à l'utilisateur U2 d'accéder au fichier ou au dossier correspondant à cette condition (ou à toutes les données contenues dans le dossier lui correspondant).

Etant donné que chaque fichier et chaque dossier de l'arborescence ARB possèdent une condition d'accès différente de celle du dossier dans lequel ils sont inclus, l'invention propose un mécanisme de reconditionnement de chaque fichier et dossier au fur et à mesure de leur insertion dans l'arborescence ARB dans le dossier cible DF, permettant de garantir que l'utilisateur U2 puisse bien accéder à toutes les données de l'arborescence ARB auxquelles il est autorisé à accéder par l'utilisateur U1 (autrement dit, à toutes les données incluses dans le dossier cible DF).

Plus précisément, l'invention propose un rechiffrement (ou reconditionnement) en deux phases, illustré schématiquement à la **figure 3** pour une arborescence ARB comprenant, à partir du dossier cible DF, N+1 niveaux hiérarchiques H0, H1, ..., HN. H0 désigne le niveau hiérarchique d'un élément f (fichier ou un dossier) inclus dans le dossier cible DF et HN le niveau hiérarchique du dossier cible DF, chaque niveau hiérarchique Hn n=1,...,N comprenant un dossier Dn dans lequel est inclus l'élément f (soit indirectement par le biais des dossiers Dn-1,Dn-2,...,D1 soit directement pour le dossier D1), le dossier cible DF désignant le dossier DN du niveau hiérarchique HN.

Ce rechiffrement en deux phases comprend :

(1) une phase PHV de reconditionnement ou rechiffrement « vertical », au cours de laquelle des clés des rechiffrement sont créées par le dispositif électronique 2 de l'utilisateur U1 afin de changer la condition d'accès portant sur un élément (fichier f ou dossier Dn) d'un niveau hiérarchique Hn en une condition d'accès portant sur un dossier Dn+1 du niveau hiérarchique directement supérieur Hn+1 dans lequel se trouve cet élément.

Les clés de rechiffrement notées respectivement rk(f→Dn+1,U1) pour un fichier f et rk(Dn→Dn+1,U1) pour un dossier Dn, générées au cours de cette phase PHV, permettent ainsi de remonter les niveaux hiérarchiques H0, H1,...,HN dans l'arborescence ARB jusqu'au niveau hiérarchique HN du dossier cible DF=DN.

Il est important de noter qu'au cours de cette phase de reconditionnement vertical PHV, on ne modifie pas la personne capable de déchiffrer le fichier ou le dossier en question (à savoir ici l'utilisateur U1).

Par ailleurs, les clés de rechiffrement générées lors de cette phase de reconditionnement vertical sont ici unidirectionnelles et ne permettent pas de descendre dans les niveaux hiérarchiques (autrement dit, elles ne permettent pas à un utilisateur autorisé par exemple à accéder uniquement à un fichier f contenu dans un répertoire D2 à accéder à l'intégralité de ce répertoire par le biais des clés de rechiffrement générées).

(2) une phase PHH de rechiffrement « horizontal », au cours de laquelle le dispositif électronique 2 crée une clé de rechiffrement portant sur le dossier cible DF=DN, de l'utilisateur U1 vers l'utilisateur U2. Cette clé de rechiffrement est destinée à permettre à l'utilisateur U2 d'accéder à l'ensemble du contenu du dossier cible DF=DN (incluant les sous-dossiers DN-1,...,D2, D1 et le fichier compris dans le dossier cible).

Ce mécanisme de rechiffrement en deux phases permet de construire une arborescence de clés de rechiffrement qui est à l'image de l'arborescence ARB de fichiers et/ou de dossiers stockée au niveau du serveur de stockage 3. Autrement dit, à chaque inclusion d'un fichier et/ou d'un nouveau dossier dans le dossier cible DF de l'arborescence ou à chaque déplacement d'un fichier et/ou d'un dossier d'un autre dossier dans le dossier cible DF, une clé de rechiffrement portant sur ce fichier ou ce dossier est créée de sorte à ramener la condition portant sur ce fichier ou ce dossier vers une condition portant sur un dossier d'un niveau hiérarchique directement supérieur, et ce jusqu'à arriver de proche en proche à une condition sur le dossier cible DF auquel l'utilisateur U1 a autorisé l'utilisateur U2 à accéder.

Il convient de noter que l'arborescence ARB peut contenir à chaque niveau hiérarchique un ou plusieurs dossiers, chaque dossier pouvant lui-même contenir un ou plusieurs fichiers et/ou un ou plusieurs dossiers. Aucune limitation n'est en effet attachée à la configuration de l'arborescence des fichiers et/ou dossiers du premier utilisateur.

Pour mettre en oeuvre ce mécanisme de reconditionnement, l'invention s'appuie sur différents procédés, à savoir :

- un procédé de construction ou de mise à jour de l'arborescence ARB, mis en oeuvre par le dispositif électronique 2 de l'utilisateur U1, et au cours duquel les clés de rechiffrement précitées sont créées et transmises au serveur de stockage 3 pour chaque fichier et/ou dossier inclus ou déplacé dans le dossier cible, ainsi qu'un chiffré du fichier le cas échéant ;
- un procédé de rechiffrement, mis en oeuvre par le serveur de stockage 3, au cours duquel le chiffré du fichier inclus ou déplacé dans le dossier cible est généré à partir des clés de rechiffrement et du chiffré du fichier transmis par le dispositif électronique 2 ;
- un premier procédé de déchiffrement, mis en oeuvre par le dispositif électronique de l'utilisateur U1 afin d'accéder au fichier inclus ou déplacé dans le dossier cible ; et
- un second procédé de déchiffrement, mis en oeuvre par le dispositif électronique de l'utilisateur U2, afin d'accéder au fichier inclus ou déplacé dans le dossier cible.

Ces divers procédés sont décrits en référence aux figures 4 à 7, dans un mode particulier de réalisation. Ce mode particulier de réalisation s'appuie sur l'utilisation d'une fonction de HMAC et des schémas de chiffrement/déchiffrement connus suivants :

• *Fonction de HMAC :*

De façon connue de l'homme du métier, une fonction de HMAC est une fonction permettant de fournir une empreinte d'un message paramétré par une clé secrète en utilisant une fonction de hachage cryptographique. Cette empreinte permet de vérifier simultanément l'intégrité de données et l'authenticité d'un message. Des exemples d'une telle fonction sont décrits, comme mentionné précédemment, dans le document RFC 2014 de l'IETF.

Dans le mode de réalisation décrit ici, cette fonction est composée de trois algorithmes distincts, pouvant être aisément développés par l'homme du métier à partir des exemples de fonctions donnés dans le document RFC 2014 :

- HMAC.InitQ : cet algorithme retourne des paramètres publics $pp_{hmac}$ ;
- HMAC.KG($pp_{hmac}$) : cet algorithme prend en entrée les paramètres publics $pp_{hmac}$ et retourne une clé K ; et
- HMAC.Hash($pp_{hmac}$,m,K) : cet algorithme prend en entrée les paramètres publics $pp_{hmac}$, un message m et une clé K et retourne une empreinte numérique *h*.

Pour rappel, la fonction HMAC.KG a été utilisée précédemment pour générer les clés secrètes des utilisateurs U1 et U2.

• *Schéma de chiffrement à clé secrète AES (Advanced Encryption Standard) :*

Ce schéma de chiffrement à clé secrète repose ici sur les quatre algorithmes suivants pouvant être aisément développés par l'homme du métier à partir des spécifications du schéma de chiffrement AES et non détaillés ici :

- AES.InitQ : cet algorithme retourne les paramètres publics $pp_{sec}$ ;
- AES.KG($pp_{sec}$) : cet algorithme prend en entrée les paramètres publics $pp_{sec}$ et retourne une clé secrète K de taille I bits ;
- AES.Enc($pp_{sec}$,m,K) : cet algorithme prend en entrée les paramètres publics $pp_{sec}$, un message m et une clé secrète K et retourne un chiffré C ; et
- AES.Dec($pp_{sec}$,C,K) : cet algorithme prend en entrée les paramètres publics $pp_{sec}$, un chiffré C et une clé secrète K et retourne un message déchiffré m.

• *Schéma de chiffrement asymétrique ou à clé publique El Gamal :*

L'invention s'appuie, dans le mode de réalisation décrit ici, sur une version modifiée du schéma de chiffrement asymétrique El Gamal, connu de l'homme du métier. Cette version modifiée repose ici sur les quatre algorithmes suivants pouvant être aisément développés par l'homme du métier à partir des spécifications du schéma El Gamal, et non détaillés ici :

- ELG.InitQ : cet algorithme choisit un nombre premier p, un groupe G d'ordre p premier (dont la loi de groupe est ici notée multiplicativement ; G est par exemple l'ensemble des points d'une courbe elliptique), un générateur g du groupe G ainsi qu'une fonction de hachage H : $G \rightarrow \{0,1\}^I$ et retourne les paramètres publics $pp_{pub}=(p,G,g,H)$, I désignant la taille en bits de l'espace des messages à chiffrer. ;

- ELG.KG($pp_{pub}$) : cet algorithme prend en entrée les paramètres publics $pp_{pub}$ et retourne une clé privée sk appartenant au groupe multiplicatif $\mathbb{Z}_p^*$ et une clé publique pk=$g^{sk}$ ;

- ELG.Enc($pp_{pub}$,m,K) : cet algorithme prend en entrée les paramètres publics $pp_{pub}$, un message m et une clé publique pk et retourne un chiffré C=(C0,C1) où C0=$pk^r$ et C1=$m \oplus H(g^r)$ avec $r \in \mathbb{Z}_p^*$ ; et

- ELG.Dec($pp_{pub}$,C,sk) : cet algorithme prend en entrée les paramètres publics $pp_{pub}$, un chiffré C et une clé privée sk et retourne un message déchiffré m= $C1 \oplus H(C0^{1/sk})$.

Bien entendu, en variante, d'autres schémas de chiffrement à clé secrète et/ou à clé publique peuvent être considérés dans le cadre de l'invention.

La **figure 4** représente, sous forme d'ordinogramme, les principales étapes d'un procédé de mise à jour ou de façon équivalente de construction d'arborescence ARB stockée par le serveur de stockage 3, tel qu'il est mis en oeuvre par le dispositif électronique 2 de l'utilisateur U1.

Pour mieux illustrer les étapes mises en oeuvre, on considère l'arborescence ARB simplifiée de fichiers/dossiers représentée à la **figure 5.**

Cette arborescence comprend 3 dossiers ou répertoires D3, D2 et D1 inclus les uns dans les autres, et un fichier f inclus dans le dossier D1. Ces dossiers et fichier appartiennent à quatre niveaux hiérarchiques distincts H3, H2, H1 et H0 de l'arborescence ARB, et sont identifiés par un identifiant public distinct, noté idD3 pour D3, idD2 pour D2, idD1 pour D1 et idf pour f.

Bien entendu, aucune limitation n'est attachée au nombre de niveaux hiérarchiques considéré dans l'arborescence (ici 4), ni au nombre et au type d'éléments présents à chaque niveau hiérarchique (fichiers et/ou dossiers). L'invention s'applique à d'autres configurations d'arborescence. Notamment, le dossier D3 peut être lui-même inclus dans un dossier racine D4 de l'arborescence ou dans un autre dossier inclus dans le dossier racine. Dans l'exemple envisagé ici, par souci de simplification, on suppose que le dossier D3 est situé à la racine de l'arborescence ARB.

La construction de l'arborescence ARB se fait classiquement de proche en proche, en créant le dossier D3, puis le dossier D2 inclus dans D3, puis le dossier D1 inclus dans D2 et enfin le fichier f inclus dans le dossier D1. De façon conventionnelle, D3 appartient à un niveau hiérarchique H3 directement supérieur à D2, qui appartient à un niveau hiérarchique H2 directement supérieur à D1, qui lui-même appartient à un niveau hiérarchique H1 directement supérieur au fichier f (H0).

On suppose ici que l'utilisateur U1 a accordé un droit d'accès au dossier cible DF=D3 à l'utilisateur U2. Toutefois, comme mentionné précédemment, le dossier cible D3 n'est pas nécessairement situé à la racine de l'arborescence de l'ensemble des fichiers et dossiers de l'utilisateur U1 stocké par le serveur de stockage 3. L'utilisateur U1 peut accorder un droit d'accès à n'importe quel dossier de l'arborescence ARB (i.e. situé à n'importe quel niveau hiérarchique de cette arborescence).

A cet effet, le dispositif électronique 2 a fourni au serveur de stockage 3 une clé de rechiffrement notée rk(D3,U1→U2) pour ce dossier D3 de l'utilisateur U1 vers l'utilisateur U2 (étape E10). Cette étape contribue à la phase de reconditionnement « horizontal » PHH mentionnée précédemment.

La clé de rechiffrement rk(D3,U1→U2) est générée par le dispositif électronique 2 en mettant en oeuvre la succession suivante d'étapes :

- Calcul d'un identifiant secret sidD3 du dossier cible DF=D3 à partir de l'identifiant public idD3, de la clé privée SK1 de l'utilisateur U1 (ou plus précisément de la clé secrète k1 contenue dans la clé privée SK1) et de la fonction HMAC. Dans le mode de réalisation décrit ici, l'identifiant secret sidD3 est déterminé à partir de la fonction de HMAC selon :

$$sidD3 = HMAC.Hash(pp_{hmac}, idD3, k1)$$

les paramètres publics $pp_{hmac}$ ayant été générés à l'aide de l'algorithme HMAC.Init introduit précédemment. Il convient de noter que ce même identifiant secret sidD3 est utilisé pour le calcul du chiffré C(D3) et peut à ce titre être calculé une unique fois ;

- Sélection d'un aléa v dans le groupe multiplicatif $\mathbb{Z}_p^*$ ;

- Calcul d'une clé de rechiffrement intermédiaire rk(U1→v) à partir de l'aléa v et de la clé privée SK1 de l'utilisateur U1 (ou plus précisément ici de la partie sk12 de SK1) selon :

$$rk(U1 \rightarrow v)=v/sk12 ;$$

- Calcul, à partir de l'identifiant secret sidD3, de l'aléa v et de la clé publique PK2 de l'utilisateur U2 (ou plus précisément ici de la partie pk21 de PK2), du couple :

$$(H30,H31)= ELG.Enc(pp_{pub},sidD3.v, pk21) \; ;$$

et

- Construction de la clé de rechiffrement rk(D3,U1→U2) selon :

$$rk(D3,U1{\rightarrow}U2)=(rk(U1{\rightarrow}v),H30,H31).$$

Il convient de noter qu'une telle clé de rechiffrement peut être générée de façon identique pour n'importe quel dossier et/ou fichier de l'arborescence si l'utilisateur U1 souhaite autoriser un accès à ce dossier et/ou fichier à l'utilisateur U2.

Nous allons maintenant décrire comment sont construits par le dispositif électronique 2 les autres éléments de l'arborescence ARB à partir du dossier cible DF=D3. Par souci de simplification, on désigne par E l'élément de l'arborescence considéré. Ainsi, dans l'exemple envisagé à la figure 5, E = D2, D1 ou f.

Pour chaque élément E inclus dans l'arborescence ARB dans le dossier cible DF=D3 (réponse oui à l'étape E20), à un niveau hiérarchique Hn (n=0,1,2 ici), le dispositif électronique 2 génère une clé de rechiffrement rk(E→E+1,U1) pour l'utilisateur U1, de l'élément E vers le dossier noté E+1 qui appartient au niveau hiérarchique directement supérieur Hn+1 dans l'arborescence ARB et dans lequel est inclus l'élément E. L'inclusion de l'élément E dans l'arborescence peut résulter indifféremment d'une création d'un nouvel élément dans l'arborescence ou d'un déplacement d'un élément existant.

Autrement dit :

- si E=D2, le dispositif électronique 2 génère une clé de rechiffrement pour l'utilisateur U1 de l'élément D2 appartenant au niveau hiérarchique H2 vers le dossier D3 appartenant au niveau hiérarchique H3 ;
- si E=D1, le dispositif électronique 2 génère une clé de rechiffrement pour l'utilisateur U1 de l'élément D1 appartenant au niveau hiérarchique H1 vers le dossier D2 appartenant au niveau hiérarchique H2 ; enfin
- si E=f, le dispositif électronique 2 génère une clé de rechiffrement pour l'utilisateur U1 de l'élément f appartenant au niveau hiérarchique H0 vers le dossier D1 appartenant au niveau hiérarchique H1.

La clé de rechiffrement rk(E→E+1,U1) pour l'utilisateur U1, de l'élément E appartenant au niveau hiérarchique Hn vers le dossier E+1 appartenant au niveau hiérarchique Hn+1 est générée ici par le dispositif électronique 2 selon l'enchaînement d'étapes suivant (étape E30) :

- Calcul des identifiants secrets sidE de l'élément E et sidE+1 de l'élément E+1 à partir respectivement de l'identifiant public idE, de l'identifiant public idE+1, de la clé privée SK1 de l'utilisateur U1 (ou plus précisément de la clé secrète k1 contenue dans la clé privée SK1) et de la fonction HMAC. Dans le mode de réalisation décrit ici :

$$sidE = HMAC.Hash(pp_{hmac}, idE, k1)$$

$$sidE + 1 = HMAC.Hash(pp_{hmac}, idE + 1, k1)$$

- Sélection d'un aléa vE dans le groupe multiplicatif $\mathbb{Z}_p^*$ ;
- Calcul d'une clé de rechiffrement intermédiaire rk(U1→vE) à partir de l'aléa vE et de la clé privée SK1 de l'utilisateur U1 (ou plus précisément ici de la partie sk12 de SK1) selon :

$$rk(U1{\rightarrow}vE)=vE/sk12 \; ;$$

- Calcul, à partir de l'identifiant secret sidE de l'élément E, de l'identifiant secret sidE+1 de l'élément E+1, de l'aléa vE et de la clé publique PK1 de l'utilisateur U1 (ou plus précisément ici de la partie pk12 de PK1), du couple :

$$(Hn0,Hn1)= ELG.Enc(pp_{pub},sidE.vE, pk12^{sidE+1}) \; ;$$

et
- Construction de la clé de rechiffrement rk(E→E+1,U1) selon :

$$rk(E{\to}E{+}1,U1)=(rk(U1{\to}vE),Hn0,Hn1).$$

L'arborescence ARB stockée par le serveur de stockage 3 est alors mise à jour par le dispositif électronique 2 (étape E40). Cette mise à jour est effectuée par le dispositif électronique 2 en fournissant au serveur de stockage 3 la clé de rechiffrement rk(E→E+1,U1) ainsi générée.

En outre, lorsque l'élément E considéré est un fichier f de données (réponse oui à l'étape E50), un chiffré C(f) de ce fichier de données est généré par le dispositif électronique 2 pour lui-même (i.e. il peut accéder au fichier f en clair en utilisant sa clé privée) et fournit au serveur de stockage 3 (étape E60). Ce chiffré C(f) est généré ici en utilisant un schéma de chiffrement hybride basé sur l'algorithme de chiffrement à clé secrète AES et l'algorithme de chiffrement asymétrique El Gamal. Le fichier f pouvant être de dimension importante, l'utilisation d'un tel schéma hybride est avantageux afin de bénéficier d'une part des fonctionnalités du chiffrement à clé publique (ou asymétrique) et d'autre part de l'efficacité du chiffrement à clé secrète.

Plus spécifiquement, le chiffrement de l'élément f appartenant au niveau hiérarchique Hn en un chiffré C(f) est réalisé selon les étapes suivantes :

- Génération d'une clé secrète Kf en utilisant l'algorithme AES.KG($pp_{sec}$), $pp_{sec}$ désignant des paramètres publics obtenus à l'aide de l'algorithme AES.Init() ;
- Chiffrement de l'élément f en un chiffré Cf selon : Cf=AES.Enc($pp_{sec}$,f,Kf) ;
- Calcul d'un identifiant secret sidf du fichier f à partir de l'identifiant public idf, de la clé privée SK1 de l'utilisateur U1 (ou plus précisément ici de la clé secrète k1 incluse dans la clé privée SK1) et de la fonction HMAC. Dans le mode de réalisation décrit ici, l'identifiant secret sidf est déterminé selon :

$$sidf = HMAC.Hash(pp_{hmac}, idf, k1)$$

les paramètres publics $pp_{hmac}$ ayant été générés à l'aide de l'algorithme HMAC.Init introduit précédemment ;
- Chiffrement avec l'algorithme ELG.Enc de la clé secrète Kf en utilisant la clé publique PK1 de l'utilisateur U1 (ou plus précisément ici de la partie pk12 de PK1), selon :

$$(F00,F01)= ELG.Enc(pp_{pub},Kf, pk12^{sidf}) \; ;$$

les paramètres publics $pp_{pub}$ ayant été générés à l'aide de l'algorithme ELG.Init introduit précédemment ; et
- Construction du chiffré C(f) selon :

$$C(f)=(Cf,F00,F01).$$

En variante, le dispositif électronique 2 peut utiliser un algorithme de chiffrement à clé publique uniquement pour générer le chiffré C(f), plutôt qu'un schéma de chiffrement hybride.

Les étapes E20 à E40, et le cas échéant E50 et E60, sont réitérées pour chaque élément (dossier ou fichier) que le dispositif électronique 2 souhaite inclure dans l'arborescence ARB stockée par le serveur de stockage 3, autrement dit, dans l'exemple de la figure 5 pour les dossiers D2, D1 et le fichier f (étape E20). Ces étapes contribuent à la phase de reconditionnement « vertical » mentionnée précédemment.

L'arborescence ARB allant du dossier cible D3 au fichier f est donc construite de manière récursive.

A l'issue de la mise à jour de l'arborescence ARB (étape E70), le serveur de stockage 3 dispose, dans l'exemple illustré à la figure 5 :

- du chiffré C(f)=(Cf,F00,F01) du fichier f ; et
- des clés de rechiffrement : rk(D3,U1→U2), rk(D2→D3,U1), rk(D1→D3,U1), rk(f→D1,U1).

Ces chiffrés et ces clés de rechiffrement sont par exemple stockés dans sa mémoire non volatile.

Il convient de noter que dans le mode de réalisation décrit ici, le dispositif électronique 2 transmet le chiffré du fichier f, ainsi que les clés de rechiffrement rk(D3,U1→U2), rk(D2→D3,U1), rk(D1→D3,U1), rk(f→D1,U1), après chaque inclusion d'un élément dans l'arborescence. Toutefois, en variante, cette transmission peut se faire en une unique fois, à l'issue de la construction de l'arborescente complète.

Le chiffré du fichier f transmis par le dispositif 2 de l'utilisateur U1 est destiné à proprement parler à l'utilisateur U1. En d'autres termes, en l'état, seul l'utilisateur U1 a accès au contenu en clair de ce chiffré en utilisant sa clé privée SK1. Aucun rechiffrement n'est nécessaire pour l'utilisateur U1 puisque ce chiffré lui est bien destiné.

Ainsi, la récupération de ce fichier f par l'utilisateur U1 à partir du chiffré C(f)=(Cf,F00,F01) stocké sur le serveur de stockage 3 est mise en oeuvre par le dispositif électronique 2 selon l'enchaînement d'étapes suivant :

- Obtention de l'identifiant public idf du fichier f ;
- Obtention (ou calcul) de l'identifiant secret du fichier f à partir de l'identifiant public idf à partir de sidf = HMAC.Hash($pp_{hmac}$, idf, k1) ;
- Déchiffrement du couple (F00,F01) en une clé secrète KE à l'aide de l'algorithme ELG.Dec, en utilisant la clé privée SK1 de l'utilisateur U1 (ou plus précisément ici de la partie s12 de SK1) et l'identifiant secret sidE selon :

$$Kf=ELG.Dec(pp_{pub},(F00,F01),s12.sidf)$$

- Déchiffrement de Cf à partir de la clé secrète KE pour obtenir l'élément E selon :

$$f=AES.Dec(pp_{sec},Cf,Kf)$$

En revanche, le chiffré du fichier f transmis par le dispositif électronique 2 de l'utilisateur U1 au serveur de stockage 3 ne peut pas être déchiffré en l'état par un autre utilisateur que l'utilisateur U1, et donc notamment par l'utilisateur U2, sans connaissance de la clé privée SK1 de l'utilisateur U1. Pour permettre à l'utilisateur U2 d'accéder à ces éléments sur autorisation de l'utilisateur U1, le serveur de stockage 3 doit rechiffrer le chiffré du fichier f à l'aide des clés de rechiffrement reçues du dispositif électronique 2.

Nous allons donc maintenant décrire en référence à la **figure 6**, les principales étapes mises en oeuvre par le serveur de stockage 3 pour rechiffrer pour l'utilisateur U2 le chiffré du fichier f de l'arborescence ARB transmis par le dispositif électronique 2 de l'utilisateur U1, et donner ainsi l'accès au dispositif électronique 4 de l'utilisateur U2 au dossier cible D3 incluant tous les dossiers et fichiers inclus dans ce dossier cible, à savoir dans l'exemple illustré à la figure 5, les dossiers D2, D1 et le fichier f.

Ce rechiffrement mis en oeuvre par le serveur de stockage 3 est composé de plusieurs rechiffrements, dont le nombre dépend de la hauteur de l'arborescence ARB envisagée entre le dossier cible DF et le fichier f. Ces différents rechiffrements se divisent selon deux catégories :

- une première catégorie de rechiffrements (formant une première étape de rechiffrement au sens de l'invention), qui permet de reconditionner un chiffré pour la clé publique PK1 de l'utilisateur U1 portant sur la condition secrète sidE d'un l'élément E d'un niveau hiérarchique Hn de l'arborescence en un chiffré pour la clé publique PK1 de l'utilisateur U1 portant sur la condition secrète sidE+1 de l'élément E+1 dans lequel est inclus directement l'élément E et qui appartient au niveau hiérarchique Hn+1 directement supérieur. Cette première catégorie de rechiffrement est appliquée itérativement à partir du chiffré C(f) du fichier f transmis par le dispositif électronique 2 au serveur de stockage ; et
- une seconde catégorie de rechiffrement (formant une seconde étape de chiffrement au sens de l'invention) qui permet de reconditionner un chiffré pour la clé publique PK1 portant sur le dossier cible DF en un chiffré pour la clé publique PK2 sans condition. Cette seconde catégorie de chiffrement est appliquée sur le chiffré obtenu à l'issue de l'application de la première catégorie de rechiffrements. Elle contient ici un seul rechiffrement à proprement parler.

Par souci de simplification, on se limite dans la suite de la description au seul rechiffrement du chiffré C(f) du fichier f situé au niveau H0 de l'arborescence ARB illustré à la figure 5. Toutefois, un mécanisme de rechiffrement identique peut être mis en oeuvre pour tout autre fichier de l'arborescence, en remplaçant dans la suite de la description le fichier f par ce fichier.

La première catégorie de rechiffrement s'appuie sur la primitive (algorithme) de rechiffrement ReENCV(C,rk(E→E+1,U1)) pour un élément E du niveau hiérarchique Hn de l'arborescence ARB, définie par l'enchaînement suivant d'étapes, où C désigne un chiffré associé au niveau hiérarchique Hn et E+1 est un élément du niveau hiérarchique Hn+1 directement supérieur incluant l'élément E :

- Décomposition du chiffré C sous la forme :

$$C=(Cf,F00,F01,F10,F11,...,Fn0,Fn1)$$

avec C=(Cf,F00,F01) si n=0, et chaque couple (Fk0,Fk1), k=0,...,n étant obtenu à partir de l'algorithme de chiffrement ELG.Enc (cf. procédé de mise à jour décrit précédemment en référence à la figure 4) ;
- Décomposition de la clé de rechiffrement rk(E→E+1,U1) en :

$$rk(E{\rightarrow}E+1,U1)=(rk(vE{\rightarrow}U1),Hn0,Hn1).$$

- Calcul de $Fn0'=(Fn0)^{rk(vE{\rightarrow}U1)}$ et de F(n+1)0=Hn0 et F(n+1)1=Hn1
- Rechiffrement du chiffré C en un chiffré C' pour le niveau hiérarchique Hn selon :

$$C'=(Cf,F00,F01,F10,F11,...,Fn0',Fn1,F(n+1)0,F(n+1)1)$$

avec C'=(Cf,F00',F01,F10,F11) pour n=0.

En d'autres mots, cette primitive ReENCV permet de reconditionner un chiffré C pour la clé publique PK1 de l'utilisateur U1 et la condition secrète sidE de l'élément E (identifiant secret de l'élément E) en un chiffré C' pour la clé publique PK1 de l'utilisateur U1 et la condition secrète sidE+1 de l'élément E+1 (identifiant secret de l'élément E+1) contenant directement l'élément E.

La seconde catégorie de rechiffrement s'appuie sur la primitive (algorithme) de rechiffrement ReENCH(C,rk(E,U1→U2)) pour un élement E du niveau hiérarchique Hn de l'arborescence ARB (ex. E=DF), définie par l'enchaînement suivant d'étapes, où C désigne un chiffré associé au niveau hiérarchique Hn :

- Décomposition du chiffré C sous la forme :

$$C=(Cf,F00,F01,F10,F11,...,Fn0,Fn1)$$

avec C=(Cf,F00,F01) si n=0, et chaque couple (Fk0,Fk1), k=0,...,n étant obtenu à partir de l'algorithme de chiffrement ELG.Enc (cf. procédé de mise à jour décrit précédemment en référence à la figure 4) ;
- Décomposition de la clé de rechiffrement rk(E,U1→U2) en :

$$rk(E,U1{\rightarrow}U2)=(rk(vE{\rightarrow}U1),Hn0,Hn1).$$

- Calcul de $Fn0'=(Fn0)^{rk(vE{\rightarrow}U1)}$ et de G0=Hn0 et Gl=Hnl ;
- Rechiffrement du chiffré C en un chiffré C' pour l'utilisateur U2 selon :

$$C'=(Cf,F00,F01,F10,F11,...,Fn0',Fn1,G0,G1)$$

avec C'=(Cf,F00',F01,G0,G1) pour n=0.

En d'autres mots, cette primitive ReENCH permet de reconditionner un chiffré C pour la clé publique PK1 de l'utilisateur U1 et la condition secrète sidE de l'élément E (identifiant secret de l'élément E) en un chiffré C' pour la clé publique PK2 de l'utilisateur U2 sans condition.
L'enchaînement des deux catégories de rechiffrement est illustré à la figure 6.
A partir du chiffré C(f)=(Cf,F00,F01) du fichier f fourni par le dispositif électronique 2 (étape F10), le serveur de stockage 3 génère un chiffré C0' en appliquant la primitive de rechiffrement ReENCV et en utilisant la clé de chiffrement rk(f→D1,U1), autrement dit :

$$C0'= ReENCV(C(f),rk(f{\rightarrow}D1,U1))$$

C0' constitue un chiffré pour l'élément hiérarchique H0.

Puis, de façon itérative, pour chaque niveau hiérarchique Hn de l'arborescence, n=1,...,N-1 (dans l'exemple illustré à la figure 5, N=3) (étapes F30 et F50), le serveur de stockage 3 génère un chiffré Cn' pour ce niveau hiérarchique Hn en appliquant la primitive de rechiffrement ReENVC à un chiffré Cn+1' généré pour le niveau hiérarchique Hn-1 et en utilisant la clé de chiffrement rk(E→E+1,U1) où E désigne un élément de Hn contenant le fichier f et E+1 un élément de Hn+1 contenant directement l'élément E (et donc également le fichier f). Autrement dit :

$$Cn'= ReENCV(Cn{-}1',rk(E{\rightarrow}E{+}1,U1))$$

A l'issue des N-1 itérations (réponse oui à l'étape F50), on obtient un chiffré CN-1' qui constitue un premier chiffré du fichier f au sens de l'invention. Ce premier chiffré est de la forme :

$$CN{-}1'=(Cf,F00',F01,F10',F11,...,F(N{-}1)0',F(N{-}1)1,FN0,FN1)$$

Le serveur de stockage 3 applique alors au premier chiffré obtenu la seconde primitive de rechiffrement ReENCH en utilisant la clé de rechiffrement rk(DF=DN,U1→U2) pour générer un second chiffré C(f)' du fichier f (étape F60), soit :

$$C(f)'=ReENCH(CN{-}1',rk(DF,U1{\rightarrow}U2))$$

Ce second chiffré est de la forme :

$$C(f)'=(Cf,F00',F01,F10',F11,...,FN0',FN1,G0,G1)$$

Ce second chiffré est fourni au dispositif électronique 4 de l'utilisateur U2 lorsque celui-ci souhaite accéder au contenu du fichier f de l'utilisateur U1 (étape F70).

Nous allons maintenant décrire, en référence à la **figure 7**, les principales étapes du procédé de déchiffrement mis en oeuvre par le dispositif électronique 4 pour accéder au fichier f de l'utilisateur U1 à partir du chiffré C(f)' fourni par le serveur de stockage 3. Ce déchiffrement est réalisé de manière itérative.

Plus spécifiquement, le chiffré C(f)' reçu du serveur de stockage 3 (étape G10) est de la forme :

$$C(f)'=(Cf,F00',F01,F10',F11,...,FN0',FN1,G0,G1)$$

Le dispositif électronique 4 déchiffre dans un premier temps, à l'aide de l'algorithme de déchiffrement ELG.Dec et en utilisant la clé privée SK2 de l'utilisateur U2 (ou plus spécifiquement ici la partie sk21 de la clé privée SK2), le chiffré formé par le couple (G0,G1) (étape G20). Il génère ainsi un message sktempN selon :

$$sktempN=ELG.Dec(pp_{pub},(G0,G1),sk21)$$

Puis, pour chaque niveau hiérarchique Hn de l'arborescence ARB, n=N jusqu'à 1 (autrement dit l'arboresencence ARB est parcourue cette fois-ci dans le sens descendant, de HN jusqu'à H0) (étapes G40 et G50), le dispositif électronique 4 déchiffre les autres éléments du chiffré C(f)' selon (étape G30) :

$$sktemp(n{-}1)=ELG.Dec((Fn0',Fn1),sktempn)$$

A l'issue de ces N itérations, le dispositif électronique 4 déchiffre à l'aide de l'algorithme de déchiffrement ELG.Dec, en utilisant comme clé de déchiffrement le message sktemp0, le couple (F00',F01) (étape G60) et génère ainsi une clé Kf selon :

$$Kf=ELG.Dec(pp_{pub},(F00',F01),sktemp0)$$

Enfin, il recupère le fichier f en appliquant l'algorithme de déchiffrement AES.Dec au chiffré Cf en utilisant la clé Kf (étape G70), soit :

$$f=AES.Dec(pp_{sec},Cf,Kf)$$

L'utilisateur U2 a ainsi accès au fichier f de l'utilisateur U1.

En reprenant les procédés de rechiffrement et de déchiffrement illustrés aux figures 6 et 7 pour chaque fichier des dossiers de l'arborescence ARB inclus dans le dossier cible DF, l'utilisateur U2 a accès à l'ensemble des fichiers et dossiers contenus dans celui-ci.

Dans les exemples décrits ici, on a envisagé un fichier f inclus ou déplacé dans le dossier cible DF.

L'inclusion du fichier f dans le dossier cible DF peut être due notamment à une création d'un nouveau fichier ou à une copie d'un fichier existant, extrait d'un autre dossier de l'arborescence des fichiers et dossiers du premier utilisateur. Il convient de noter qu'en cas de copie d'un fichier extrait d'un autre dossier également inclus dans le dossier cible, ce fichier est associé à deux clés de rechiffrement distinctes.

En revanche, le déplacement d'un fichier d'un dossier de l'arborescence des fichiers et dossiers du premier utilisateur vers le dossier cible impose de supprimer l'ancienne clé de rechiffrement liée à l'ancien dossier dans lequel se trouvait le fichier.

## Revendications

**1.** Procédé de mise à jour, par un dispositif électronique (2) d'un premier utilisateur (U1), d'une arborescence (ARB) de fichiers de données et/ou de dossiers du premier utilisateur mémorisée dans un serveur de stockage (3) apte à mettre en oeuvre un mécanisme de rechiffrement, cette arborescence comprenant au moins un dossier cible auquel le premier utilisateur a autorisé un second utilisateur à accéder en fournissant (E10) au serveur de stockage une clé de rechiffrement pour ce dossier cible du premier utilisateur vers le second utilisateur, ledit procédé étant **caractérisé en ce qu'**il comprend, pour chaque inclusion ou déplacement d'un élément dans ce dossier cible (E20), cet élément pouvant être un fichier de données ou un dossier :

- une étape (E30) de génération d'une clé de rechiffrement pour le premier utilisateur de l'élément vers un dossier appartenant à un niveau hiérarchique directement supérieur dans l'arborescence dans lequel est inclus l'élément, cette clé de rechiffrement étant générée à partir d'un identifiant secret de l'élément, d'un identifiant secret attribué au dossier du niveau hiérarchique directement supérieur, et des clés privée et publique du premier utilisateur ;
- si ledit élément est un fichier de données (E50), une étape (E60) de chiffrement de l'élément en utilisant une clé publique du premier utilisateur et l'identifiant secret attribué à l'élément ; et
- une étape (E40,E60) de mise à jour de l'arborescence comprenant la fourniture au serveur de stockage de la clé de rechiffrement générée pour le premier utilisateur et, si l'élément est un fichier de données, du chiffré de cet élément.

**2.** Procédé selon la revendication 1 dans lequel l'identifiant secret attribué à l'élément est déterminé par le dispositif électronique à partir d'un identifiant public de l'élément et d'une clé privée du premier utilisateur.

**3.** Procédé selon la revendication 1 ou 2 dans lequel :

- l'identifiant secret de l'élément est déterminé par application d'une fonction de hachage paramétrée par la clé privée du premier utilisateur à l'identifiant public de l'élément ; et/ou
- l'identifiant secret du dossier du niveau hiérarchique supérieur est déterminé par application d'une fonction de hachage paramétrée par la clé privée du premier utilisateur sur un identifiant public attribué à ce dossier.

**4.** Procédé selon l'une quelconque des revendications 1 à 3 dans lequel l'étape de chiffrement de l'élément comprend l'application d'un algorithme de chiffrement à clé publique ou d'un algorithme de chiffrement hybride s'appuyant sur un algorithme de chiffrement à clé publique et un algorithme de chiffrement à clé secrète.

**5.** Procédé selon l'une quelconque des revendications 1 à 4 dans lequel la clé de rechiffrement pour le premier utilisateur de l'élément vers le dossier du niveau hiérarchique directement supérieur est générée en appliquant un algorithme de chiffrement à clé publique à un message obtenu à partir de l'identifiant privé de l'élément et d'une clé temporaire dérivée de la clé privée du premier utilisateur, en utilisant la clé publique du premier utilisateur et l'identifiant secret du dossier du niveau hiérarchique directement supérieur.

**6.** Procédé selon l'une quelconque des revendications 1 à 5 dans lequel la clé de rechiffrement du premier utilisateur vers le deuxième utilisateur est généré en appliquant un algorithme de chiffrement à clé publique sur un message obtenu à partir d'un identifiant secret attribué au dossier cible et de la clé privée du premier utilisateur, en utilisant la clé publique du second utilisateur.

**7.** Procédé de rechiffrement, par un serveur de stockage (3) d'une arborescence (ARB) de fichiers de données et/ou de dossiers d'un premier utilisateur, cette arborescence comprenant au moins un dossier cible auquel le premier utilisateur a autorisé un second utilisateur à accéder, le procédé de rechiffrement étant **caractérisé en ce qu'**il comprend, pour chaque fichier de données inclus ou déplacé dans le dossier cible pour lequel un chiffré a été fourni audit serveur de stockage :

    - une première étape de rechiffrement (F20-F50) résultant en un premier chiffré du fichier et comprenant :

        ∘ un rechiffrement (F20) du chiffré du fichier fourni au serveur de stockage en utilisant une clé de rechiffrement pour le premier utilisateur de ce fichier vers un dossier d'un niveau hiérarchique directement supérieur de l'arborescence dans lequel est inclus le fichier ; et
        ∘ pour chaque niveau hiérarchique k de l'arborescence depuis ce niveau hiérarchique directement supérieur jusqu'à un niveau hiérarchique directement inférieur au niveau hiérarchique du dossier cible, un rechiffrement (F40) résultant en un chiffré pour le niveau hiérarchique k, d'un chiffré obtenu pour le niveau hiérarchique k-1, ce rechiffrement étant mis en oeuvre en utilisant une clé de rechiffrement pour le premier utilisateur d'un dossier du niveau hiérarchique k vers un dossier du niveau hiérarchique k+1 dans lesquels est inclus le fichier ;

    le premier chiffré du fichier correspondant au chiffré obtenu pour le niveau hiérarchique directement inférieur au niveau hiérarchique du dossier cible ; et
    - une seconde étape (F70) de rechiffrement résultant en un second chiffré du fichier comprenant un rechiffrement du premier chiffré avec une clé de rechiffrement pour le dossier cible du premier utilisateur vers le second utilisateur.

**8.** Procédé de déchiffrement d'un chiffré d'un fichier de données d'une arborescence de fichiers de données et/ou de dossiers d'un premier utilisateur (U1), cette arborescence comprenant au moins un dossier cible contenant le fichier et auquel le premier utilisateur a autorisé un second utilisateur à accéder, le procédé de déchiffrement étant destiné à être mis en oeuvre par un dispositif électronique (4) du second utilisateur, le chiffré du fichier ayant été fourni au dispositif électronique suite à l'exécution par un serveur de stockage d'un procédé de rechiffrement selon la revendication 7, ledit procédé de déchiffrement comprenant une étape de déchiffrement (G20-G70) de ce chiffré en utilisant une clé privée du second utilisateur.

**9.** Programme d'ordinateur comportant des instructions pour l'exécution des étapes du procédé de mise à jour selon l'une quelconque des revendications 1 à 6, ou d'un procédé de rechiffrement selon la revendication 7 ou d'un procédé de déchiffrement selon la revendication 8 lorsque ledit programme est exécuté par un ordinateur.

**10.** Support d'enregistrement lisible par un ordinateur sur lequel est enregistré un programme d'ordinateur comprenant des instructions pour l'exécution des étapes du procédé de mise à jour selon l'une quelconque des revendications 1 à 6, ou d'un procédé de rechiffrement selon la revendication 7 ou d'un procédé de déchiffrement selon la revendication 8.

**11.** Dispositif électronique (2) d'un premier utilisateur (U1) apte à mettre à jour une arborescence (ARB) de fichiers de données et/ou de dossiers du premier utilisateur mémorisée dans un serveur de stockage (3) apte à mettre en oeuvre un mécanisme de rechiffrement, cette arborescence comprenant au moins un dossier cible auquel le premier utilisateur a autorisé un second utilisateur à accéder en fournissant au serveur de stockage une clé de rechiffrement pour ce dossier cible du premier utilisateur vers le second utilisateur, le dispositif électronique (2) du premier utilisateur comportant des modules activés pour chaque inclusion ou déplacement d'un élément dans ce dossier cible, cet élément pouvant être un fichier de données ou un dossier, ces modules étant **caractérisés en ce qu'**ils comprennent:

- un module de génération d'une clé de rechiffrement pour le premier utilisateur de l'élément vers un dossier appartenant à un niveau hiérarchique directement supérieur dans l'arborescence dans lequel est inclus l'élément, cette clé de rechiffrement étant générée à partir d'un identifiant secret de l'élément, d'un identifiant secret attribué au dossier du niveau hiérarchique directement supérieur, et des clés privée et publique du premier utilisateur ;
- un module de chiffrement de l'élément, activé si l'élément est un fichier de données et apte à utiliser une clé publique du premier utilisateur et l'identifiant secret attribué à l'élément ; et
- un module de mise à jour de l'arborescence apte à fournir au serveur de stockage la clé de rechiffrement générée pour le premier utilisateur et si l'élément est un fichier de données, le chiffré de cet élément.

**12.** Serveur de stockage (3) d'une arborescence de fichiers de données et/ou de dossiers d'un premier utilisateur, comprenant au moins un dossier cible auquel le premier utilisateur a autorisé un second utilisateur à accéder, le serveur de stockage comprenant un premier et un second modules de rechiffrement activés pour chaque fichier de données inclus ou déplacé dans le dossier cible pour lequel un chiffré a été fourni au serveur de stockage, le serveur de stockage étant **caractérisé en ce que** :

- le premier module de rechiffrement est apte à générer un premier chiffré du fichier en mettant en oeuvre :

  ◦ un rechiffrement du chiffré du fichier fourni au serveur de stockage en utilisant une clé de rechiffrement pour le premier utilisateur de ce fichier vers un dossier d'un niveau hiérarchique directement supérieur de l'arborescence dans lequel est inclus le fichier ; et
  ◦ pour chaque niveau hiérarchique k de l'arborescence depuis ce niveau hiérarchique directement supérieur jusqu'à un niveau hiérarchique directement inférieur au niveau hiérarchique du dossier cible, un rechiffrement résultant en un chiffré pour le niveau hiérarchique k, d'un chiffré obtenu pour le niveau hiérarchique k-1, ce rechiffrement étant mis en oeuvre en utilisant une clé de rechiffrement pour le premier utilisateur d'un dossier du niveau hiérarchique k vers un dossier du niveau hiérarchique k+1 dans lesquels est inclus le fichier ;

  le premier chiffré du fichier correspondant au chiffré obtenu pour le niveau hiérarchique directement inférieur au niveau hiérarchique du dossier cible ;
- le second module de rechiffrement est apte à générer un second chiffré du fichier en mettant en oeuvre un rechiffrement du premier chiffré avec une clé de rechiffrement pour le dossier cible du premier utilisateur vers le second utilisateur.

**13.** Dispositif électronique (4) comprenant un module de déchiffrement d'un chiffré d'un fichier de données d'une arborescence de fichiers de données et/ou de dossiers d'un premier utilisateur, cette arborescence comprenant au moins un dossier cible contenant le fichier et auquel le premier utilisateur a autorisé le second utilisateur à accéder, le chiffré du fichier ayant été fourni au dispositif électronique par un serveur de stockage selon la revendication 12, ledit module de déchiffrement étant apte à déchiffrer ce chiffré en utilisant une clé privée du second utilisateur.

**14.** Système (1) comprenant :

- un dispositif électronique (2) d'un premier utilisateur selon la revendication 11 ;
- un serveur de stockage (3) selon la revendication 12 d'une arborescence de fichiers de données et/ou de dossiers du premier utilisateur comprenant au moins un dossier cible auquel le premier utilisateur a autorisé un second utilisateur à accéder ; et
- un dispositif électronique (4) du second utilisateur selon la revendication 13.

**Patentansprüche**

**1.** Verfahren zur Aktualisierung, durch eine elektronische Vorrichtung (2) eines ersten Benutzers (U1), eines Baumes (ARB) von Datendateien und/oder von Ordnern des ersten Benutzers, der auf einem Speicherserver (3) gespeichert ist, der geeignet ist, einen Mechanismus der Umverschlüsselung (Proxy-Re-Encryption) durchzuführen, wobei dieser Baum wenigstens einen Zielordner umfasst, auf den zuzugreifen der erste Benutzer einen zweiten Benutzer autorisiert hat, indem er an den Speicherserver einen Umverschlüsselungsschlüssel für diesen Zielordner vom ersten Benutzer zum zweiten Benutzer geliefert hat (E10), wobei das Verfahren **dadurch gekennzeichnet ist, dass** es umfasst, für jede Einfügung oder Verschiebung eines Elements in diesen Zielordner (E20), wobei dieses Element eine Datendatei oder ein Ordner sein kann:

- einen Schritt (E30) der Erzeugung eines Umverschlüsselungsschlüssels für den ersten Benutzer des Elements zu einem Ordner, der einer unmittelbar darüberliegenden hierarchischen Ebene in dem Baum angehört, in welchem das Element enthalten ist, wobei dieser Umverschlüsselungsschlüssel aus einer geheimen Kennung des Elements, einer geheimen Kennung, die dem Ordner der unmittelbar darüberliegenden hierarchischen Ebene zugewiesen ist, und einem privaten und einem öffentlichen Schlüssel des ersten Benutzers erzeugt wird;
- falls das Element eine Datendatei ist (E50), einen Schritt (E60) der Verschlüsselung des Elements unter Verwendung eines öffentlichen Schlüssels des ersten Benutzers und der dem Element zugewiesenen geheimen Kennung; und
- einen Schritt (E40, E60) der Aktualisierung des Baumes, welcher die Lieferung des Umverschlüsselungsschlüssels, der für den ersten Benutzer erzeugt wurde, und, falls das Element eine Datendatei ist, des Verschlüsselungsergebnisses dieses Elements an den Speicherserver umfasst.

2. Verfahren nach Anspruch 1, wobei die dem Element zugewiesene geheime Kennung von der elektronischen Vorrichtung aus einer öffentlichen Kennung des Elements und einem privaten Schlüssel des ersten Benutzers erzeugt wird.

3. Verfahren nach Anspruch 1 oder 2, wobei:

- die geheime Kennung des Elements durch Anwendung einer Hashfunktion, die durch den privaten Schlüssel des ersten Benutzers parametrisiert ist, auf die öffentliche Kennung des Elements bestimmt wird; und/oder
- die geheime Kennung des Ordners der höheren hierarchischen Ebene durch Anwendung einer Hashfunktion, die durch den privaten Schlüssel des ersten Benutzers parametrisiert ist, auf eine diesem Ordner zugewiesene öffentliche Kennung bestimmt wird.

4. Verfahren nach einem der Ansprüche 1 bis 3, wobei der Schritt der Verschlüsselung des Elements die Anwendung eines Verschlüsselungsalgorithmus mit öffentlichem Schlüssel oder eines hybriden Verschlüsselungsalgorithmus, der sich auf einen Verschlüsselungsalgorithmus mit öffentlichem Schlüssel und einen Verschlüsselungsalgorithmus mit geheimem Schlüssel stützt, umfasst.

5. Verfahren nach einem der Ansprüche 1 bis 4, wobei der Umverschlüsselungsschlüssel für den ersten Benutzer des Elements zu dem Ordner der unmittelbar darüberliegenden hierarchischen Ebene erzeugt wird, indem ein Verschlüsselungsalgorithmus mit öffentlichem Schlüssel auf eine Nachricht angewendet wird, die aus der privaten Kennung des Elements und einem aus dem privaten Schlüssel des ersten Benutzers abgeleiteten temporären Schlüssel unter Verwendung des öffentlichen Schlüssels des ersten Benutzers und der geheimen Kennung des Ordners der unmittelbar darüberliegenden hierarchischen Ebene erhalten wurde.

6. Verfahren nach einem der Ansprüche 1 bis 5, wobei der Umverschlüsselungsschlüssel vom ersten Benutzer zum zweiten Benutzer erzeugt wird, indem ein Verschlüsselungsalgorithmus mit öffentlichem Schlüssel auf eine Nachricht angewendet wird, die aus einer dem Zielordner zugewiesenen geheimen Kennung und dem privaten Schlüssel des ersten Benutzers unter Verwendung des öffentlichen Schlüssels des zweiten Benutzers erhalten wurde.

7. Verfahren zur Umverschlüsselung, durch einen Speicherserver (3), eines Baumes (ARB) von Datendateien und/oder von Ordnern eines ersten Benutzers, wobei dieser Baum wenigstens einen Zielordner umfasst, auf den zuzugreifen der erste Benutzer einen zweiten Benutzer autorisiert hat, wobei das Verfahren zur Umverschlüsselung **dadurch gekennzeichnet ist, dass** es umfasst, für jede in den Zielordner eingefügte oder verschobene Datendatei, für welche ein Verschlüsselungsergebnis an den Speicherserver geliefert worden ist:

- einen ersten Schritt der Umverschlüsselung (F20-F50), aus dem ein erstes Verschlüsselungsergebnis der Datei resultiert und der umfasst:

o eine Umverschlüsselung (F20) des an den Speicherserver gelieferten Verschlüsselungsergebnisses der Datei unter Verwendung eines Umverschlüsselungsschlüssels für den ersten Benutzer dieser Datei zu einem Ordner einer unmittelbar darüberliegenden hierarchischen Ebene des Baumes, in welchem die Datei enthalten ist; und

o für jede hierarchische Ebene k des Baumes von dieser unmittelbar darüberliegenden hierarchischen Ebene bis zu einer hierarchischen Ebene unmittelbar unter der hierarchischen Ebene des Zielordners, eine Umverschlüsselung (F40) eines für die hierarchische Ebene k-1 erhaltenen Verschlüsselungsergebnisses, aus der ein Verschlüsselungsergebnis für die hierarchische Ebene k resultiert, wobei diese Umverschlüsselung durchgeführt wird, indem ein Umverschlüsselungsschlüssel für den ersten Benutzer von einem Ordner der hierarchischen Ebene k zu einem Ordner der hierarchischen Ebene k+1, in welchen die Datei enthalten ist, verwendet wird;

wobei das erste Verschlüsselungsergebnis der Datei dem Verschlüsselungsergebnis entspricht, das für die hierarchische Ebene unmittelbar unter der hierarchischen Ebene des Zielordners erhalten wird; und
- einen zweiten Schritt (F70) der Umverschlüsselung, aus dem ein zweites Verschlüsselungsergebnis der Datei resultiert und der eine Umverschlüsselung des ersten Verschlüsselungsergebnisses mit einem Umverschlüsselungsschlüssel für den Zielordner vom ersten Benutzer zum zweiten Benutzer umfasst.

8. Verfahren zur Entschlüsselung eines Verschlüsselungsergebnisses einer Datendatei eines Baumes von Datendateien und/oder von Ordnern eines ersten Benutzers (U1), wobei dieser Baum wenigstens einen Zielordner umfasst, der die Datei enthält und auf den zuzugreifen der erste Benutzer einen zweiten Benutzer autorisiert hat, wobei das Verfahren zur Entschlüsselung dazu bestimmt ist, von einer elektronischen Vorrichtung (4) des zweiten Benutzers durchgeführt zu werden, wobei das Verschlüsselungsergebnis der Datei an die elektronische Vorrichtung im Anschluss an die Ausführung, durch einen Speicherserver, eines Verfahrens zur Umverschlüsselung nach Anspruch 7 geliefert worden ist, wobei das Verfahren zur Entschlüsselung einen Schritt der Entschlüsselung (G20-G70) dieses Verschlüsselungsergebnisses unter Verwendung eines privaten Schlüssels des zweiten Benutzers umfasst.

9. Computerprogramm, welches Anweisungen zur Ausführung der Schritte des Verfahrens zur Aktualisierung nach einem der Ansprüche 1 bis 6 oder eines Verfahrens zur Umverschlüsselung nach Anspruch 7 oder eines Verfahrens zur Entschlüsselung nach Anspruch 8, wenn das Programm von einem Computer ausgeführt wird, umfasst.

10. Von einem Computer lesbares Aufzeichnungsmedium, auf welchem ein Computerprogramm aufgezeichnet ist, das Anweisungen zur Ausführung der Schritte des Verfahrens zur Aktualisierung nach einem der Ansprüche 1 bis 6 oder eines Verfahrens zur Umverschlüsselung nach Anspruch 7 oder eines Verfahrens zur Entschlüsselung nach Anspruch 8 umfasst.

11. Elektronische Vorrichtung (2) eines ersten Benutzers (U1), welche geeignet ist, einen Baum (ARB) von Datendateien und/oder von Ordnern des ersten Benutzers zu aktualisieren, der auf einem Speicherserver (3) gespeichert ist, der geeignet ist, einen Mechanismus der Umverschlüsselung durchzuführen, wobei dieser Baum wenigstens einen Zielordner umfasst, auf den zuzugreifen der erste Benutzer einen zweiten Benutzer autorisiert hat, indem er an den Speicherserver einen Umverschlüsselungsschlüssel für diesen Zielordner vom ersten Benutzer zum zweiten Benutzer geliefert hat, wobei die elektronische Vorrichtung (2) des ersten Benutzers Module umfasst, die für jede Einfügung oder Verschiebung eines Elements in diesen Zielordner aktiviert werden, wobei dieses Element eine Datendatei oder ein Ordner sein kann, wobei diese Module **dadurch gekennzeichnet sind, dass** sie umfassen:

- ein Modul zur Erzeugung eines Umverschlüsselungsschlüssels für den ersten Benutzer des Elements zu einem Ordner, der einer unmittelbar darüberliegenden hierarchischen Ebene in dem Baum angehört, in welchem das Element enthalten ist, wobei dieser Umverschlüsselungsschlüssel aus einer geheimen Kennung des Elements, einer geheimen Kennung, die dem Ordner der unmittelbar darüberliegenden hierarchischen Ebene zugewiesen ist, und einem privaten und einem öffentlichen Schlüssel des ersten Benutzers erzeugt wird;
- ein Modul zur Verschlüsselung des Elements, welches aktiviert wird, falls das Element eine Datendatei ist, und geeignet ist, einen öffentlichen Schlüssel des ersten Benutzers und die dem Element zugewiesene geheime Kennung zu verwenden; und
- ein Modul zur Aktualisierung des Baumes, welches geeignet ist, den Umverschlüsselungsschlüssel, der für den ersten Benutzer erzeugt wurde, und, falls das Element eine Datendatei ist, das Verschlüsselungsergebnis dieses Elements an den Speicherserver zu liefern.

12. Speicherserver (3) zur Speicherung eines Baumes von Datendateien und/oder von Ordnern eines ersten Benutzers, der wenigstens einen Zielordner umfasst, auf den zuzugreifen der erste Benutzer einen zweiten Benutzer autorisiert hat, wobei der Speicherserver ein erstes und ein zweites Umverschlüsselungsmodul umfasst, die für jede in den Zielordner eingefügte oder verschobene Datendatei aktiviert werden, für welche ein Verschlüsselungsergebnis an den Speicherserver geliefert worden ist, wobei der Speicherserver **dadurch gekennzeichnet ist, dass**:

- das erste Umverschlüsselungsmodul geeignet ist, ein erstes Verschlüsselungsergebnis zu erzeugen, indem es durchführt:

  ∘ eine Umverschlüsselung des an den Speicherserver gelieferten Verschlüsselungsergebnisses der Datei unter Verwendung eines Umverschlüsselungsschlüssels für den ersten Benutzer dieser Datei zu einem Ordner einer unmittelbar darüberliegenden hierarchischen Ebene des Baumes, in welchem die Datei enthalten ist; und
  ∘ für jede hierarchische Ebene k des Baumes von dieser unmittelbar darüberliegenden hierarchischen Ebene bis zu einer hierarchischen Ebene unmittelbar unter der hierarchischen Ebene des Zielordners, eine Umverschlüsselung eines für die hierarchische Ebene k-1 erhaltenen Verschlüsselungsergebnisses, aus der ein Verschlüsselungsergebnis für die hierarchische Ebene k resultiert, wobei diese Umverschlüsselung durchgeführt wird, indem ein Umverschlüsselungsschlüssel für den ersten Benutzer von einem Ordner der hierarchischen Ebene k zu einem Ordner der hierarchischen Ebene k+1, in welchen die Datei enthalten ist, verwendet wird;

  wobei das erste Verschlüsselungsergebnis der Datei dem Verschlüsselungsergebnis entspricht, das für die hierarchische Ebene unmittelbar unter der hierarchischen Ebene des Zielordners erhalten wird;
  - das zweite Umverschlüsselungsmodul geeignet ist, ein zweites Verschlüsselungsergebnis der Datei zu erzeugen, indem es eine Umverschlüsselung des ersten Verschlüsselungsergebnisses mit einem Umverschlüsselungsschlüssel für den Zielordner vom ersten Benutzer zum zweiten Benutzer durchführt.

13. Elektronische Vorrichtung (4), welche ein Modul zur Entschlüsselung eines Verschlüsselungsergebnisses einer Datendatei eines Baumes von Datendateien und/oder von Ordnern eines ersten Benutzers umfasst, wobei dieser Baum wenigstens einen Zielordner umfasst, der die Datei enthält und auf den zuzugreifen der erste Benutzer den zweiten Benutzer autorisiert hat, wobei das Verschlüsselungsergebnis der Datei an die elektronische Vorrichtung von einem Speicherserver nach Anspruch 12 geliefert worden ist, wobei das Entschlüsselungsmodul geeignet ist, dieses Verschlüsselungsergebnis unter Verwendung eines privaten Schlüssels des zweiten Benutzers zu entschlüsseln.

14. System (1), welches umfasst:

   - eine elektronische Vorrichtung (2) eines ersten Benutzers nach Anspruch 11;
   - einen Speicherserver (3) nach Anspruch 12 zur Speicherung eines Baumes von Datendateien und/oder von Ordnern des ersten Benutzers, der wenigstens einen Zielordner umfasst, auf den zuzugreifen der erste Benutzer einen zweiten Benutzer autorisiert hat; und
   - eine elektronische Vorrichtung (4) des zweiten Benutzers nach Anspruch 13.

**Claims**

1. Method of updating, by an electronic device (2) of a first user (U1), a tree (ARB) of data files and/or of folders of the first user stored in a storage server (3) able to implement a re-encryption mechanism, this tree comprising at least one target folder which the first user has authorized a second user to access by providing (E10) the storage server with a re-encryption key for this target folder of the first user to the second user, said method being **characterized in that** it comprises, for each inclusion or displacement of an element in this target folder (E20), this element being able to be a data file or a folder:

   - a step (E30) of generating a re-encryption key for the first user of the element towards a folder belonging to a directly higher hierarchical level in the tree in which the element is included, this re-encryption key being generated on the basis of a secret identifier of the element, of a secret identifier allocated to the folder of the directly higher hierarchical level, and of the private and public keys of the first user;
   - if said element is a data file (E50), a step (E60) of encrypting the element by using a public key of the first user and the secret identifier allocated to the element; and

- a step (E40,E60) of updating the tree comprising the provision to the storage server of the re-encryption key generated for the first user and, if the element is a data file, of the ciphertext of this element.

2. Method according to Claim 1, in which the secret identifier allocated to the element is determined by the electronic device on the basis of a public identifier of the element and of a private key of the first user.

3. Method according to Claim 1 or 2, in which:

   - the secret identifier of the element is determined by applying a hash function parametrized by the private key of the first user to the public identifier of the element; and/or
   - the secret identifier of the folder of the higher hierarchical level is determined by applying a hash function parametrized by the private key of the first user to a public identifier allocated to this folder.

4. Method according to any one of Claims 1 to 3, in which the step of encrypting the element comprises the application of a public-key encryption algorithm or of a hybrid encryption algorithm based on a public-key encryption algorithm and a secret-key encryption algorithm.

5. Method according to any one of Claims 1 to 4, in which the re-encryption key for the first user of the element towards the folder of the directly higher hierarchical level is generated by applying a public-key encryption algorithm to a message obtained on the basis of the private identifier of the element and of a temporary key derived from the private key of the first user, by using the public key of the first user and the secret identifier of the folder of the directly higher hierarchical level.

6. Method according to any one of Claims 1 to 5, in which the re-encryption key of the first user to the second user is generated by applying a public-key encryption algorithm to a message obtained on the basis of a secret identifier allocated to the target folder and of the private key of the first user, by using the public key of the second user.

7. Method of re-encryption, by a storage server (3) of a tree (ARB) of data files and/or of folders of a first user, this tree comprising at least one target folder which the first user has authorized a second user to access, the re-encryption method being **characterized in that** it comprises, for each data file included or displaced in the target folder for which said storage server has been provided with a ciphertext:

   - a first re-encryption step (F20-F50) resulting in a first ciphertext of the file and comprising:

     ∘ a re-encryption (F20) of the ciphertext of the file provided to the storage server by using a re-encryption key for the first user of this file towards a folder of a directly higher hierarchical level of the tree in which the file is included; and
     ∘ for each hierarchical level k of the tree from this directly higher hierarchical level until a hierarchical level directly lower than the hierarchical level of the target folder, a re-encryption (F40) resulting in a ciphertext for the hierarchical level k, of a ciphertext obtained for the hierarchical level k-1, this re-encryption being implemented by using a re-encryption key for the first user of a folder of the hierarchical level k towards a folder of the hierarchical level k+1, in which folders the file is included;

     the first ciphertext of the file corresponding to the ciphertext obtained for the hierarchical level directly lower than the hierarchical level of the target folder; and
   - a second re-encryption step (F70) resulting in a second ciphertext of the file comprising a re-encryption of the first ciphertext with a re-encryption key for the target folder of the first user towards the second user.

8. Method of decrypting a ciphertext of a data file of a tree of data files and/or of folders of a first user (U1), this tree comprising at least one target folder containing the file and which the first user has authorized a second user to access, the decryption method being intended to be implemented by an electronic device (4) of the second user, the ciphertext of the file having been provided to the electronic device subsequent to the execution by a storage server of a re-encryption method according to Claim 7, said decryption method comprising a step (G20-G70) of decryption of this ciphertext by using a private key of the second user.

9. Computer program comprising instructions for the execution of the steps of the updating method according to any one of Claims 1 to 6, or of a re-encryption method according to Claim 7 or of a decryption method according to Claim 8 when said program is executed by a computer.

**10.** Recording medium readable by a computer on which is recorded a computer program comprising instructions for the execution of the steps of the updating method according to any one of Claims 1 to 6, or of a re-encryption method according to Claim 7 or of a decryption method according to Claim 8.

**11.** Electronic device (2) of a first user (U1) able to update a tree (ARB) of data files and/or of folders of the first user which is stored in a storage server (3) able to implement a re-encryption mechanism, this tree comprising at least one target folder which the first user has authorized a second user to access by providing the storage server with a re-encryption key for this target folder of the first user to the second user, the electronic device (2) of the first user comprising modules activated for each inclusion or displacement of an element in this target folder, this element being able to be a data file or a folder, these modules being **characterized in that** they comprise:

- a module for generating a re-encryption key for the first user of the element towards a folder belonging to a directly higher hierarchical level in the tree in which the element is included, this re-encryption key being generated on the basis of a secret identifier of the element, of a secret identifier allocated to the folder of the directly higher hierarchical level, and of the private and public keys of the first user;
- a module for encrypting the element, activated if the element is a data file and able to use a public key of the first user and the secret identifier allocated to the element; and
- a module for updating the tree able to provide the storage server with the re-encryption key generated for the first user and if the element is a data file, the ciphertext of this element.

**12.** Storage server (3) for a tree of data files and/or of folders of a first user, comprising at least one target folder which the first user has authorized a second user to access, the storage server comprising first and second re-encryption modules activated for each data file included or displaced in the target folder for which the storage server has been provided with a ciphertext, the storage server being **characterized in that**:

- the first re-encryption module is able to generate a first ciphertext of the file by implementing:

  ○ a re-encryption of the ciphertext of the file provided to the storage server by using a re-encryption key for the first user of this file towards a folder of a directly higher hierarchical level of the tree in which the file is included; and
  ○ for each hierarchical level k of the tree from this directly higher hierarchical level until a hierarchical level directly lower than the hierarchical level of the target folder, a re-encryption resulting in a ciphertext for the hierarchical level k, of a ciphertext obtained for the hierarchical level k-1, this re-encryption being implemented by using a re-encryption key for the first user of a folder of the hierarchical level k towards a folder of the hierarchical level k+1, in which folders the file is included;

  the first ciphertext of the file corresponding to the ciphertext obtained for the hierarchical level directly lower than the hierarchical level of the target folder;
- the second re-encryption module is able to generate a second ciphertext of the file by implementing a re-encryption of the first ciphertext with a re-encryption key for the target folder of the first user towards the second user.

**13.** Electronic device (4) comprising a module for decrypting a ciphertext of a data file of a tree of data files and/or of folders of a first user, this tree comprising at least one target folder containing the file and which the first user has authorized the second user to access, the ciphertext of the file having been provided to the electronic device by a storage server according to Claim 12, said decryption module being able to decrypt this ciphertext by using a private key of the second user.

**14.** System (1) comprising:

- an electronic device (2) of a first user according to Claim 11;
- a storage server (3) according to Claim 12 for a tree of data files and/or of folders of the first user comprising at least one target folder which the first user has authorized a second user to access; and
- an electronic device (4) of the second user according to Claim 13.

FIG.1

FIG.2

FIG.3

## FIG.4

E10

PHH

AUTH DF=DN(idDN,sidDN)
TX C(N),rk(DN,U1→U2)

E20
E ? — non

oui

E70

E30 — GEN rk(E→E+1,U1)

STOP

PHV

E40 — TX C(E),rk(E→E+1,U1)

E50
non — E=f ?

oui

E60 — ENC(f),TX C(f)

H3 — DF=D3(idD3)

H2 — D2(idD2)

ARB

H1 — D1(idD1)

## FIG.5

H0 — f(idf)

C(f),n=0 —F10

CO'=Re ENCV(C(f),rk(f → D1,U1) —F20

n++ —F30

Cn'=Re ENCV(Cn-1',rk(E → E+1,U1)) —F40

F50

non    n=N-1 ?

oui

C(f)'=Re ENCH(CN-1',rk(DN,U1 → U2) —F60

TX C(f)' —F70

**FIG.6**

RX C(f)',n=N —G10

sktemp N=ELG.Dec((G0,G1),sk21) —G20

sktemp(n-1)=ELG.Dec((Fn0',Fn1),sktemp n) —G30

n-- —G40

G50

non    n=-1 ?

oui

Kf=ELG.Dec(F00',F01,sktemp 0) —G60

f=AES.Dec(Cf,Kf) —G70

**FIG.7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **G. ATENIESE et al.** Improved proxy re-encryption schemes with applications to secure distributed storage. *ACM Transactions on Information and System Security,* Février 2006, vol. 9 (1

- **HSIAO-YING LIN et al.** *A Secure Fine-Grained Access Control Mechanism for Networked Storage Systems*